# EUROPÄISCHE PATENTSCHRIFT

(11) **EP 2 897 777 B1**
(45) Veröffentlichungstag und Bekanntmachung des Hinweises auf die Patenterteilung: **08.01.2020**
(21) Anmeldenummer: 13762858.2
(22) Anmeldetag: 18.09.2013
(51) Int. Cl.: B29C 45/14

(54) **VERFAHREN ZUR HERSTELLUNG EINES MIT EINEM UV-GEHÄRTETEN LACK VERSEHENEN FORMTEIL AUS KUNSTSTOFF SOWIE SELBIGES FORMTEIL**
METHOD FOR PRODUCING A MOULDED PART WITH A UV-CURED VARNISH, MOULDED PART MADE OF PLASTIC AND MOULDED PART
PROCÉDÉ DE FABRICATION D'UNE PIÈCE DE FORMAGE POURVUE D'UNE LAQUE DURCISSANT AUX RAYONS UV À BASE DE PLASTIQUE ET PIÈCE DE FORMAGE ELLE-MÊME

(30) Priorität: 19.09.2012 EP 12185097
(43) Veröffentlichungstag der Anmeldung: 29.07.2015
(73) Patentinhaber: Covestro Deutschland AG, 51373 Leverkusen (DE)
(72) Erfinder: LEONHARDT, Konstantin, 41515 Grevenbroich (DE); KÜNZEL, Roland, 51381 Leverkusen (DE); HERDT, Björn, 51467 Bergisch Glandbach (DE); DAHMEN, Hans-Jörg, 47269 Duisburg (DE); MUNDSTOCK, Holger, 42929 Wermelskirchen (DE); POPHUSEN, Dirk, 51467 Bergisch Gladbach (DE)
(74) Vertreter: Levpat
(86) Internationale Anmeldenummer: PCT/EP2013/069331
(87) Internationale Veröffentlichungsnummer: WO 2014/044694

(56) Entgegenhaltungen:
- EP-A2- 2 174 765
- WO-A1-2005/118689
- DE-A1-102010 020 039
- US-A1- 2008 220 250

## Beschreibung

Die Erfindung betrifft ein Verfahren zur Herstellung eines mit einem UV-gehärteten Lack versehenen Formteils aus Kunststoff in einem Spritzgießwerkzeug, wobei der UV-gehärtete Lack eine als funktionelle Fläche ausgebildeten Sichtfläche bildet. Weiterhin betrifft die Erfindung ein selbiges Formteil mit der UV-gehärteten Lackschicht als funktionelle Fläche ausgebildeten Sichtfläche.

Zur Herstellung von Formteilen aus Kunststoff in einem Spritzgießwerkzeug sind verschiedene Verfahren bekannt. Gemäß dem In-Mold-Decoration (IMD) Verfahren wird eine auf einer Rolle aufgewickelte Heißprägefolie geträgert auf Polyesterfolie von oben nach unten durch ein Spritzgießwerkzeug geführt und beim Schließen des Werkzeugs zwischen den beiden Werkzeughälften arretiert. Beim Einspritzen der Schmelze wird die Folie durch den Druck der Schmelze an die Wand der Kavität gepresst. Eine Lackschicht der Heißprägefolie verbindet sich durch die hohe Temperatur der Schmelze mit dem Kunststoff und löst sich nach dem Abkühlen von der Polyester-Trägerfolie. Das fertige Bauteil kann anschließend entnommen werden, während die Trägerfolie unter der Schließeinheit auf einer zweiten Rolle aufgewickelt und ein neuer Dekorbereich vor der Kavität positioniert wird.

Das IMD-Verfahren wird vorwiegend bei Bauteilen mit geringer dreidimensionaler Tiefe angewandt so zum Beispiel für Handyschalen, flache Zierleisten im Automobilbau oder auch andere Bedienblenden in Fahrzeugen oder im Haushalt. Formteile, die aufgrund ihrer Geometrieüber das In-Mold-Decoration-Verfahren nicht mehr herstellbar sind, können über das FIM-Verfahren (Film-Insert-Molding) hergestellt werden.

Das Film-Insert-Molding (FIM) oder Folienhinterspritzen ist ein Sonderverfahren des Spritzgießens, bei dem vor dem Einspritzen der Kunststoffschmelze dreidimensional vorgeformte Einleger in das Spritzgießwerkzeug eingelegt werden. Die Einleger sind meist umgeformte, bedruckte Folien, die anschließend beschnitten werden. Für die Umformverfahren kann eine mechanische oder berührungslose Verformung verwendet werden. Die berührungslosen Verformungsverfahren sind klassische Thermoformverfahren. Hierfür wird beispielsweise das Tiefziehverfahren verwendet, wobei keine genaue Positionsgenauigkeit erreicht werden kann. Bei engerer Positionstoleranz wird das bekannte High Pressure Forming (HPF) Verfahren verwendet. Die Folien werden grundsätzlich nach der Verformung beschnitten. Hierfür können die gängigen Verfahren wie Stanzen, Fräsen, Klingenschnitt, Laserstrahlschneiden, Wasserstrahlschneiden eingesetzt werden.

Ein Formteil der eingangs genannten Art sowie ein Verfahren zur Herstellung eines derartigen Formteils sind bereits aus der EP1695808B1 bekannt. Das Zierteil umfasst ein Trägerteil aus einem thermoplastischen Kunststoff mit einer hohen mechanischen Festigkeit und einer guten Schlagzähigkeit und ferner ein Deckteil aus einem thermoplastischen Kunststoff mit einer als Funktionelle Fläche ausgebildeten Sichtfläche, das eine dekorative Funktion übernimmt, so z.B. ein Hochglanzteil, das Polymethylmethacrylat (PMMA) besteht. Das Zierteil ist im Mehrkomponentenspritzgussverfahren hergestellt. Die aus PMMA bestehende Sichtfläche ist zwar hochglänzend ausgebildet, aber andere erforderliche und gewünschte Eigenschaften, wie beispielsweise eine ausreichende Kratzfestigkeit und Bruchfestigkeit, weist sie nicht auf.

DE 102010020039A1 offenbart ein Verfahren zur Herstellung eines Formteils aus Kunststoff mit einer als Hochglanzfläche ausgebildeten Sichtfläche in einem Spritzgießwerkzeug, wobei ein aus einer Trägerschicht aus einem thermoplastischen Kunststoff und einer gehärteten Beschichtung bestehender Folienzuschnitt mit einer Kunststoffschmelze hinterspritzt wird und die Trägerschicht mit der gehärteten Schicht, die der Kavität des Werkzeugs zugewandt ist, dadurch vollständig in die Kavität des Werkzeugs gedrückt wird und sich mit der Schmelze verbindet. DE 102010020039 A1 offenbart allerdings nicht, welcher Art die Beschichtungen sind und ist vage was die Angabe der Trägerschichten angeht, so dass der Fachmann bei der Nacharbeitung feststellen muss, dass sich in der schon vorgehärteten Beschichtung beim Zuschneiden der Folienstücke Defekte im Randbereich der Folien zeigen und/oder sich an den Radien und in der Folienoberfläche beim Hinterspritzen Mikrorisse bilden können.

Aus WO2005/080484 ist ein Verfahren zur Herstellung von beschichteten Formteilen, insbesondere Kraftfahrzeugteilen bekannt, dass dadurch gekennzeichnet ist, dass eine strahlungshärtbare Verbundschichtplatte oder -folie aus mindestens einer Trägerschicht und einer Lackschicht bestehend aus einer strahlungshärtbaren Masse auf Formteile aufgeklebt wird und danach die Lackschicht durch Strahlung gehärtet wird oder in einem Tiefziehwerkzeug tiefgezogen und die Rückseite der Trägerschicht mit der Kunststoffmasse hinterspritzt wird, wobei die Strahlungshärtung der Lackschicht nach dem Tiefziehvorgang oder nach dem Tiefziehen und Hinterspritzen erfolgt. Das Formgeben der Verbundschichtplatte oder- folie durch Aufkleben oder Tiefziehen bedeutet einen zusätzlichen Verfahrensschritt, der Fehlerquellen birgt.

EP 2174765 A2 und US 2008/220250 A1 beschreiben Verfahren zur Herstellung von beschichteten Formteilen, bei denen eine Trägerschicht mit einem UV-härtbaren Lack versehen wird, dieser einer physikalischen Trocknung unterzogen wird und anschließend der so beschichtete Träger mittels eins Thermoformverfahrens in eine 3-dimensionale Form gebracht wird. Nach einer Endhärtung des Lackes durch Bestrahlung mit UV-Licht wird der Träger mit einer Kunststoffmasse hinterspritzt. Dieses Verfahren weist 2 wesentliche Nachteile auf: Wie das Vergleichsbeispiel 2 im experimentellen Teil des vorliegenden Schriftstücks belegt, führt eine thermische Verformung eines Substrats, welches mit einem Lack beschichtet ist, der lediglich eine physikalische Antrocknung aufweist, zu Problemen bei der Haftung des Lackes auf dem Substrat. Zum anderen führt die Hinterspritzung eines ausgehärteten Lackes mit einer heißen Kunststoffmasse zu Defekten, wie z.B. Rissen im Lack (Vergleichsbeispiel 1 im experimentellen Teil des vorliegenden Schriftstücks).

Vor diesem Hintergrund liegt der Erfindung die Aufgabe zugrunde, ein einfaches und wirtschaftliches Verfahren zur Herstellung von optisch hochwertigen und gleichzeitig die Anforderungen bezüglich der verschiedensten Anforderungen wie z.B. Kratzfestigkeit, Chemikalienbeständigkeit und UV-Beständigkeit erfüllenden Formteilen, sowie selbige Formteile zur Verfügung zu stellen.

Die erstgenannte Aufgabe wird gelöst durch ein Verfahren gemäß den Merkmalen des Patentanspruchs 1. Die Unteransprüche betreffen besonders zweckmäßige Weiterbildungen der Erfindung.

Erfindungsgemäß ist also ein Verfahren zur Herstellung eines mit einem UV-gehärteten Lack versehenen Formteils aus Kunststoff in einem Spritzgießwerkzeug mit einer als funktionelle Fläche ausgebildeten Sichtfläche, wobei der UV-gehärtete Lack besagte Sichtfläche bildet, bei welchem
- ein aus einer Trägerschicht aus einem thermoplastischen Kunststoff und einem thermisch teilgehärteten UV-härtbaren Lack bestehender, nicht vorgeformter und im Wesentlichen ebener Folienzuschnitt derart in einer Kavität des Spritzgießwerkzeugs angeordnet wird, dass die teilgehärtete Lackschicht einer die Negativform der Sichtfläche des Formteils abbildenden Matrizenoberfläche zugewandt ist, und
- bei welchem der in der Kavität angeordnete Folienzuschnitt von einer dem thermisch teilgehärteten UV-härtbaren Lack abgewandten rückseitigen Oberfläche mit einem thermoplastischen Kunststoff derart hinterspritzt wird, dass sich die Trägerschicht des Folienzuschnitts mit der eingespritzten heißen Schmelze verbindet und
- dass eine aus dem Einspritzdruck der eingespritzten Schmelze resultierende Druckkraft in Richtung der Matrizenoberfläche gerichtet ist, wobei der Folienzuschnitt unter der Einwirkung der Druckkraft und einer aus dem direkten Kontakt mit der heißen Schmelze resultierenden Erwärmung vollflächig an die Matrizenoberfläche gedrückt und dreidimensional verformt wird und
- nach Herauslösen des Formteils der thermisch teilgehärtete UV-härtbare Lackdurch UV-Strahlung endgehärtet wird und die als funktionelle Fläche ausgebildete Sichtfläche des Formteils bildet.

Mikrorissbildung in der Lackschicht an den Radien und auf den Oberflächen beim Hinterspritzen durch Kunststoffschmelze und entsprechender Verformung der Folie vermieden. Dies ist überraschend, da dem Fachmann bekannt ist, dass nicht ausgehärtete Lackbeschichtungen auf Folienträgerschichten sich beim Folienhinterspritzen ablösen und Blasen werfen können.

Weiterhin wird durch den mehrschichtigen Aufbau des Formteils teilweise eine Trennung von Funktion und Optik erreicht. Die gewünschten optischen Eigenschaften des Formteils, nämlich ein Farbmuster oder eine optische Tiefenwirkung und die mechanische Festigkeit des Formteils werden dabei durch das Zusammenspiel von dem durch das Hinterspritzen der Folie hergestellten Basiselement aus dem thermoplastischen Kunststoff und der Trägerschicht realisiert, während die erforderlichen verschiedensten Anforderungen wie z.B. Chemikalienbeständigkeit, UV-Beständigkeit und Kratzfestigkeit und beispielsweise eine im Glanz abgestimmte Sichtfläche durch die Trägerschicht und die Lack-Beschichtung realisiert werden. Dies gilt für Oberflächen unabhängig davon ob sie hochglänzend, mattiert oder auch als Softtouch-Oberfläche ausgeführt sind.

Die schonende Kontakterwärmung zwischen der ca. 250°C bis 300°C heißen Schmelze und der Folie sowie die gleichmäßige Druckbeaufschlagung der rückseitigen Folienoberfläche durch die als Stempel fungierende Schmelze bewirken, dass ein aus einer Trägerschicht und einem thermisch teilgehärteten UV-härtbaren Lack bestehendes Halbzeug dreidimensional verformt wird, ohne dass die Folie bzw. der thermisch teilgehärteten UV-härtbaren Lack in ihren Eigenschaften verändert und/oder beschädigt wird.

Unterstützt wird die dreidimensionale Verformung der Folie durch die Temperierung des die Kavität begrenzenden Bereichs des Spritzgießwerkzeugs vor und/oder während und/oder nach der Herstellung des Formteils. Durch selbige Temperierung des aus einer Matrize und einer Patrize bestehenden Spritzgießwerkzeugs auf eine Temperatur von ca. 30°C bis 120°C, bevorzugt 50°C bis 100°C und besonders bevorzugt 60°C bis 90°C wird der an der Matrizenoberfläche anliegende thermisch teilgehärtete UV-härtbare Lack der Folie durch die Temperierung derart gekühlt, dass die Verformung der Folie begünstigt und eine Zerstörung des thermisch teilgehärteten UV-härtbaren Lacks durch zu hohe Temperaturen wirksam verhindert wird.

Es erweist sich außerdem als vorteilhaft, den Folienzuschnitt im Bereich einer Einspritzöffnung des Spritzgießwerkzeugs derart zu fixieren, so dass die aus dem Einspritzdruck der eingespritzten Schmelze resultierende Druckkraft auf die dem thermisch teilgehärteten UV-härtbaren Lackabgewandten rückseitigen Oberfläche des Folienzuschnitts gerichtet ist. Dabei ist es auch möglich, dem im Wesentlichen ebenen Folienzuschnitt eine leichte Vorformung durch das Fixieren zu geben, eine sogenannte 2,5 D (dimensionale) Verformung. Durch eine 2D oder auch 2,5 D Fixierung der Folie wird eine unerwünschte Lageveränderung der Folie in der Kavität infolge des Einspritzvorgangs verhindert und es wird gewährleistet, dass die Schmelze ausschließlich in einen Raum zwischen der Rückseite der Folie und dem Spritzgießwerkzeug geleitet wird und dadurch die Druckkraft in Richtung der Matrizenoberfläche erzeugt werden kann. Verunreinigungen der die Sichtfläche bildenden Folienoberfläche durch in einen Raum zwischen dem thermisch teilgehärteten UV-härtbaren Lack und der Matrizenoberfläche eintretende Schmelze werden somit verhindert. Es ist erfindungsgemäß vorgesehen, dass zugeschnittene oder ausgestanzte Formteile, die an die Geometrie der Kavität des Werkzeugs angepasst sind, hinterspritzt oder -schäumt werden. Ebenfalls denkbar ist eine Hinterspritzen oder -schäumen ungeschnittener Folien, bei denen im kontinuierlichen Verfahren einzelne Folienbereiche durch Hinterspritzen und -schäumen verformt und danach erst zugeschnitten und UV-endgehärtet werden.

In einer anderen, besonders zweckmäßige Ausführungsform des erfindungsgemäßen Verfahrens wird die Folie hinterschäumt, so Z. B. durch TSG, dem Thermoplast-Schaumspritzgießen. Dabei wird die Polymerschmelze mit einem Treibmittel beladen, welches nach dem Einspritzvorgang in der Kavität zum Aufschäumen der Formmasse führt. Grundsätzlich lassen sich Schäume im Spritzgießprozess durch chemische oder physikalische (z.B. Stickstoff oder CO₂) Treibmittel in der Kunststoffschmelze realisieren. In manchen Fällen ist auch eine Kombination von physikalischen und chemischen Treibmitteln möglich. Dies kann eine Viskositätsreduzierung der Kunststoffschmelze, beispielsweise durch ebensolche feste, flüssige oder gasförmige Zuschläge bewirken, und so ist es möglich, die Fließfähigkeit der eingespritzten Schmelze bzw. das Fließweglängen-/Wandstärkenverhältnis zu erhöhen und dadurch das Bauteil in Dünnwandtechnik auszubilden. Durch die Dünnwandtechnik kann in vorteilhafter Weise eine Reduzierung des Gesamtgewichts des Formteils erreicht werden. Durch das Beimengen von derartigen Zuschlagen bilden sich beim Aushärten des thermoplastischen Kunststoffs durch Phasentrennung zwischen dem Kunststoff und dem Zuschlag üblicherweise Schlieren in dem Basiselement. Der zwischen der Schmelze und der Matrizenoberfläche angeordnete Folienzuschnitt wirkt nach dem Einspritzen des Kunststoffs als Wärmeisolator zwischen der ca. 250°C bis 300°C heißen Schmelze und der ca. 70°C bis 90°C warmen Matrizenoberfläche, sodass sich der Bereich in unmittelbarer Nähe der Folie langsamer abkühlt als der weiter entfernt liegende übrige Bereich. Infolge dieser unterschiedlichen Abkühlungsgeschwindigkeiten erstarren die von der Folie weiter entfernt liegenden Bereiche demnach schneller, sodass die Phasentrennung und dadurch auch die Schlierenbildung ausschließlich in diesem Bereich stattfinden. Im Bereich der Verbindung mit der Folie entstehen keine Schlieren, sodass eine optisch einwandfreie Oberfläche wie z.B. hochglänzend, mattiert oder eine Softtouch Fläche als Sichtfläche zur Verfügung gestellt werden kann.

Ebenfalls erfinderisch denkbar ist das Reinforced Reaction Injection Moulding (RRIM) mit z.B. Polyurethanen oder Polyurethanschäumen, bei dem mindestens zwei reaktive Komponenten gemischt und unverzüglich in das Werkzeug zum Ausreagieren überführt werden.

Eine wiederum abgewandelte Ausführungsform des Verfahrens sieht vor, dass auf einer der Beschichtung abgewandten rückseitigen Oberfläche des Folienzuschnitts vor dem Hinterspritzen des Folienzuschnitts zumindest abschnittsweise ein Farbauftrag angeordnet wird. Hierdurch können Formteile mit Mustern, Ornamenten, Schriftzügen oder Logos, beispielsweise durch Bedrucken, Beschichten oder Bestempeln, hergestellt werden. Durch die Anordnung auf der Rückseite der Folie ist der Farbauftrag sowohl vor Witterungseinflüssen als auch vor einer Zerstörung durch unmittelbare mechanische Belastung dauerhaft geschützt.

In diesem Falle bietet sich das Verfahren des Spritzprägens an, bei dem die Kunststoffschmelze in ein Werkzeug gespritzt wird, das nicht vollständig geschlossen ist, sondern bei dem zu Beginn des Einspritzprozesses einen Spalt offen steht, der erst im Laufe des Spritzvorgangs geschlossen wird. So verteilt sich die Kunststoffschmelze um die Einspritzpunkte bevor sie auf die Folie trifft und somit werden die Temperaturbelastung und die daraus resultierende Scherung beim Einspritzen deutlich reduziert und Farbauswaschungen auf der Folienrückseite werden vermindert.

Weiterhin erweist es sich als besonders praxisnah, wenn an dem Formteil zumindest ein Funktionselement, insbesondere eine Dichtung und/oder ein Mittel zur Fixierung des Formteils und/oder zur Aufnahme einer Dichtung, und/oder ein Versteifungselement angespritzt wird. Hierdurch kann ein einteiliges Formteil durch einen einfachen Spritzgießprozess hergestellt werden, wobei sämtliche Funktions- und Designeigenschaften in einem einzigen einstückigen Bauteil integriert sind.

Erfindungsgemäß ist weiter vorgesehen, dass das Formteil durch Hinterspritzen des Folienzuschnitts im Ein- oder Mehrkomponentenspritzgussverfahren hergestellt wird. Beim Mehrkomponentenspritzgussverfahren können durch die Kombination von Kunststoffen mit verschiedenen Eigenschaften die Gesamtanforderungen des Formteils hinsichtlich der optischen und mechanischen Eigenschaften und anderer Funktionseigenschaften optimal erfüllt werden.

Die zweitgenannte Aufgabe wird gelöst durch ein Formteil gemäß den Merkmalen des Patentanspruchs 8. Die Unteransprüche betreffen besonders zweckmäßige Weiterbildungen der Erfindung.

Erfindungsgemäß ist ein Formteil aus Kunststoff mit einer als funktionelle Fläche ausgebildeten Sichtfläche vorgesehen, wobei das Formteil aus einem Basiselement aus einem thermoplastischen Kunststoff und einer mit dem Basiselement verbundenen Folie besteht, welche eine thermoplastische Trägerschicht und einen sichtseitig angeordneten zuerst thermisch teilgehärteten und dann UV-endgehärteten Lack aufweist, im weiteren Lackschicht genannt, wobei das Basiselement auf der der Lackschicht abgewandten Oberfläche der Folie angespritzt ist und eine durch die Folie gebildete Sichtfläche zumindest abschnittsweise dreidimensional ausgeformt ist.

Durch den mehrschichtigen Aufbau des Formteils wird zumindest teilweise eine Funktionstrennung gewährleistet, wobei durch das Basiselement und die Trägerschicht die gewünschte Farbigkeit oder Tiefenwirkung, also die optische Funktion, und die mechanische Festigkeit realisiert werden, während weitere Funktionseigenschaften, wie beispielsweise UV-Beständigkeit und Kratzfestigkeit oder optische Eigenschaften wie der Glanzgrad der Sichtfläche, durch die Trägerschicht im Zusammenspiel mit der Lackschicht übernommen wird.

Unter einer als funktionelle Fläche ausgebildeten Sichtfläche wird die nach Außen zugewandte Seite des Formteils verstanden, wobei die funktionelle Fläche als Hochglanzfläche, als mattierte Fläche oder auch als Softtouch Fläche ausgebildet sein kann. Bevorzugt ist eine Ausbildung der funktionellen Fläche als Hochglanzfläche.

In einer weiteren Ausführungsform der Erfindung ist die Oberfläche der Werkzeugmatrize genarbt, so dass beim Hinterspritzen die Lackschicht gegen die genarbte Matrizenoberfläche gepresst wird und die resultierende funktionelle Fläche der Sichtfläche mit einer auch feinen Strukturierung versehen wird.

Weiterhin erweist es sich als besonders vorteilhaft, wenn das Basiselement zumindest ein angespritztes Funktionselement, insbesondere eine Dichtung und/oder ein Mittel zur Fixierung des Formteils und/oder zur Aufnahme einer Dichtung, und/oder ein Versteifungselement aufweist. Hierdurch kann ein Formteil durch einen einfachen Spritzgießprozess hergestellt werden, wobei sämtliche Funktions- und Designeigenschaften in einem einzigen einstückigen Bauteil integriert sind.

Erfindungsgemäß ist weiter vorgesehen, dass das Basiselement und die Funktionselemente durch Hinterspritzen der Folie im Ein- oder Mehrkomponentenspritzgussverfahren hergestellt sind. Beim Mehrkomponentenspritzgussverfahren können durch die Kombination von Kunststoffen mit verschiedenen Eigenschaften die Gesamtanforderungen des Formteils hinsichtlich der optischen und mechanischen Eigenschaften und anderer Funktionseigenschaften optimal erfüllt werden. Beispielsweise kann für das Basiselement ein anderer Kunststoff verwendet werden als für die Funktionselemente.

Ein bevorzugtes Formteil hat z.B. folgenden Schichtaufbau, wobei die alphabetische Reihenfolge der räumlichen Anordnung entspricht:
A) thermisch teilgehärteter und dann UV-endgehärteter Lack (Lackschicht)
B) Trägerschicht
C) farbgebende Schicht (optional)
D) Basiselement und/oder Funktionselement

In einer zweckmäßigen Ausgestaltung des erfindungsgemäßen Formteils wird auf einer der Lackschicht abgewandten rückseitigen Oberfläche der Trägerschicht der Folie zumindest abschnittsweise ein Farbauftrag angeordnet ist. Der Farbauftrag kann beispielsweise durch Bedrucken oder Bestempeln der Folienoberfläche hergestellt werden. Hierdurch können die Formteile mit einem Muster, mit Ornamenten, mit Schriftzügen oder mit Logos versehen werden. Durch die Anordnung auf der Rückseite der Trägerschicht der Folie ist der Farbauftrag sowohl vor Witterungseinflüssen als auch vor einer Zerstörung durch unmittelbare mechanische Belastung dauerhaft geschützt. Ebenfalls denkbar ist ein zusätzlicher Farbauftrag auf der UV-endgehärteten Lackschicht vor und nach der UV-Endhärtung durch Siebdruck, Bestempeln oder Rollen.

Die Trägerschicht soll eine dauerhaft hohe Zähigkeit des Gesamtverbundes der Folie gewährleisten, während das Basiselement die mechanische Last des Formteils trägt. Die Trägerschicht und /oder das Basiselement besteht vorzugsweise aus einem thermoplastischen Polymer, insbesondere aus Polycarbonaten, Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylen-propylendienstryolcopolymere (A-EPDM), Polyetherimide, Polyetherketone, Polyphenylensulfide, Polyphenylenether, Poly- oder Copolykondensate der Terephthalsäure, wie beispielhaft und vorzugsweise Poly- oder Copolyethylenterephthalat (PET oder CoPET), glycol-modifiziertes PET (PETG), glycomodifiziertes Poly- oder Copolycyclohexandimethylenterephthalat (PCTG), Poly- oder Copolybutylenterephthalat (PBT oder CoPBT), andere amorphe (Co)polyester oder deren Mischungen.

Weiterhin genannt seien Polyethylen, Polypropylen, Polystyrol, Polybutadien, Polyester, Polyamide, Polyether, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Träger sind Polyolefine, wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-AcrylnitrilCopolymere), PC (Polycarbonate), PMMA (Polymethylmethacrylate), PBT (PoIy(butylenterephthalat)e), PA (Polyamide), ASA (Acrylnitril-Styrol-AcrylesterCopolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC.

Ganz besonders bevorzugt ist Polycarbonat. Bevorzugt ist ebenfalls Polymethylmethacrylat (PMMA) oder schlagzähmodifiziertes PMMA oder amorphe (Co)polyester.

Geeignete Polycarbonate für die Herstellung der erfindungsgemäßen Trägerschichten und/oder Basiselemente/Funktionselemente sind alle bekannten Polycarbonate. Dies sind Homopolycarbonate, Copolycarbonate und thermoplastische Polyestercarbonate. Bevorzugt ist eine Polycarbonatplatte oder -folie als Trägerschicht und eine Polycarbonatformkörper als Basiselement.

Bevorzugte thermoplastische Kunststoffe sind Polycarbonate oder Copolycarbonate, Poly- oder Copolyacrylate, Poly- oder Copolymethacrylate oder Blends enthaltend wenigstens einen dieser thermoplastischen Kunststoffe. Besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten Mw von 10.000 bis 200.000, bevorzugt von 26.000 bis 120.000 oder Poly- oder Copolyacrylate und Poly- oder Copolymethacrylate mit mittleren Molekulargewichten MW im Bereich von 30 000 bis 300 000, besonders bevorzugt im Bereich von 80 000 bis 250 000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 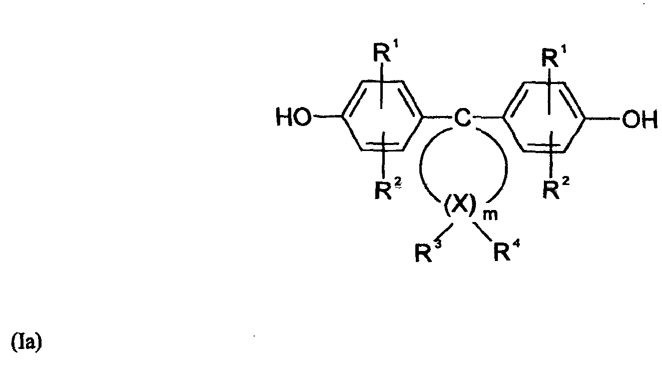 worin
- R¹ und R²: unabhängig voneinander Wasserstoff, Halogen, bevorzugt Chlor oder Brom, C1-C8-Alkyl, C5-C6-Cycloalkyl, C6-C10-Aryl, bevorzugt Phenyl, und C7-C12-Aralkyl, bevorzugt Phenyl-C1-C4-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C1-C6-Alkyl und
- X: Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formen1 (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

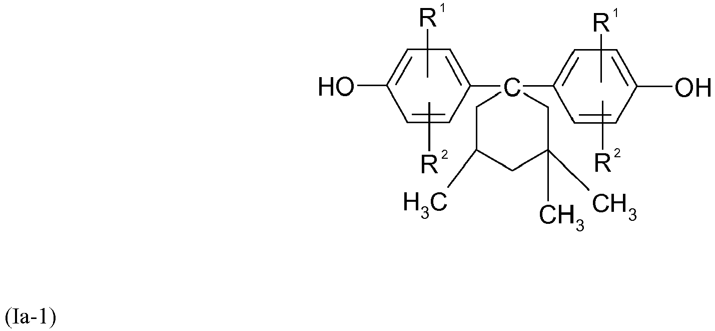

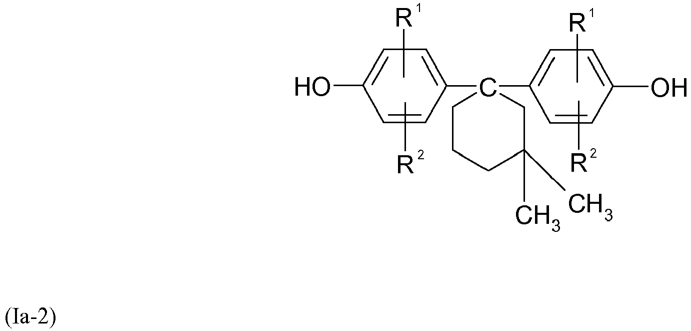

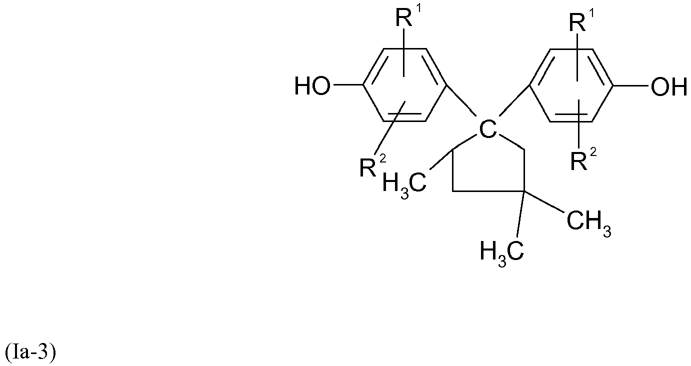

Ein ganz besonders bevorzugtes Dihydroxydiphenylcycloalkane der Formen1 (Ia) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Poly- oder Copolycarbonate hergestellt unter Verwendung von Dihydroxyarylverbindung der Formel (Ia) weisen üblicherweise eine höhere Glastemperatur Tg und eine höhere Vicat-Erweichungstemperatur B/50 als Polypolycarbonat auf Basis von 2,2-Bis-(4-hydroxyphenyl)-propan als Dihydroxyarylverbindung auf.

Geeignete Kohlensäurederivate können beispielsweise Diarylcarbonate der allgemeinen Formel (II) sein, 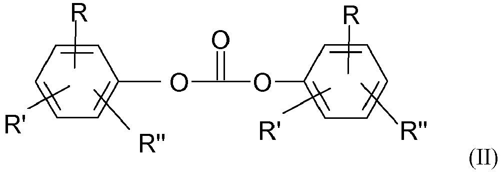 worin
- R, R' und R": unabhängig voneinander gleich oder verschieden für Wasserstoff, lineares oder verzweigtes C1-C34-Alkyl, C7-C34-Alkylaryl oder C6-C34-Aryl stehen, R weiterhin auch -COO-R'" bedeuten kann, wobei R'" für Wasserstoff, lineares oder verzweigtes Cl-C34-Alkyl, C7-C34-Alkylaryl oder C6-C34-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenylphenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-l-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 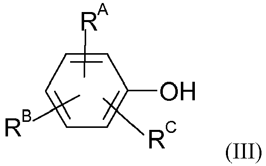 wobei
- R^{A}: für lineares oder verzweigtes C1-C34-Alkyl, C7-C34-Alkylaryl, C6-C34-Aryl oder für -COO-RD steht, wobei RD für Wasserstoff, lineares oder verzweigtes C1-C34-Alkyl, C7-C34-Alkylaryl oder C6-C34-Aryl steht, und
- R^{B}, R^{C}: unabhängig voneinander gleich oder verschieden für Wasserstoff, lineares oder verzweigtes Cl-C34-Alkyl, C7-C34-Alkylaryl oder C6-C34-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Polymethyl(meth)acrylat können sowohl Polymethyl(meth)acrylat (PMMA) als auch schlagzäh modifiziertes PMMA (sz-PMMA), Blends aus PMMA oder aus sz-PMMA eingesetzt werden. Sie sind unter der Marke Plexiglas bei der Röhm GmbH erhältlich. Unter Polymethyl(meth)acrylat werden sowohl Polymere der Methacrylsäure und ihrer Derivate, beispielsweise ihrer Ester, als auch Polymere der Acrylsäure und ihrer Derivate als auch Mischungen aus beiden vorstehenden Komponenten verstanden.

Bevorzugt sind Polymethyl(meth)acrylat-Kunststoffe mit einem Methylmethacrylat-Monomeranteil von mindestens 80 Gew.-%, bevorzugt mindestens 90 Gew.-% und gegebenenfalls 0 Gew.-% bis 20 Gew.-%, bevorzugt 0 Gew.-% bis 10 Gew.-% weiterer vinylisch copolymerisierbarer Monomere wie z. B. C1- bis C8-Alkylestern der Acrylsäure oder der Methacrylsäure, z. B. Methylacrylat, Ethylacrylat, Butylacrylat, Butylmethacrylat, Hexylmethacrylat, Cyclohexylmethacrylat, ferner Styrol und Styrolderivate, wie beispielsweise [alpha]-Methylstyrol oder p-Methylstyrol. Weitere Monomere können sein Acrylsäure, Methacrylsäure, Maleinsäureanhydrid, Hydroxyester der Acrylsäure oder Hydroxyester der Methacrylsäure.

Die thermoplatischen Polymere können Alterungsschutzmittel enthalten, die die Stabilität wesentlich erhöhen. Zur Modifizierung der erfindungsgemäßen Produkte können Substanzen wie z. B. Ruß, Kieselgur, Kaolin, Tone, CaF₂, CaCO₃, Aluminiumoxide, Glasfasern und anorganische Pigmente sowohl als Füllstoffe als auch als Nukleierungsmittel zugesetzt werden. Folie und/oder Basiselement können erfindungsgemäß unabhängig voneinander farbig ausgebildet sein.

In einer weiteren Ausführungsform der Erfindung sind die Kunststoffplatten oder -folien transparent.

Als Kunststoffe für erfindungsgemäße transparente Platten oder Folien oder aber als Basiselement kommen alle transparenten Thermoplaste in Frage: Polyacrylate, Polymethylmethacrylate (PMMA; Plexiglas® von der Fa. Röhm), Cycloolefin-Copolymere (COC; Topas® von der Fa. Ticona); Zenoex® von der Fa. Nippon Zeon oder Apel® von der Fa. Japan Synthetic Rubber), Polysulfone (Ultrason® von der Fa. BASF oder Udel® von der Fa. Solvay), Polyester, wie z.B. PET oder PEN, Polycarbonat, Polycarbonat/Polyester-Blends, z.B. PC/PET, Polycarbonat/Polycyclohexylmethanol-cyclohexandicarboxylat (PCCD; Xylecs® von der Fa. GE) und Polycarbonat/Polybutylenterephthalat (PBT)Blends.

Bevorzugt werden Polycarbonate, Polyester oder coextrudierte Polycarbonat/polyester oder PMMA benutzt.

Hierbei erweist es sich als besonders vorteilhaft, wenn die Folie und/oder das Basiselement transparent ausgebildet sind. Durch die Kombination einer transparenten Folie mit einem transparenten Hinterspritzmaterial als Basiselement lassen sich optische Tiefeneffekte erzielen.

In der Praxis hat es sich bewährt, dass die Trägerschicht der Folie und/oder das Basiselement aus Polycarbonat (PC), (Co)polyester oder Polymethylmethacrylat (PMMA) bestehen, wobei zumindest das Material der Trägerschicht der Folie transparent ausgebildet sein sollte. Als Material für das Basiselement, also als Hinterspritzmaterial, kommen neben PC, (Co)polyestern und PMMA auch die oben genannten Thermoplaste in Frage. Das Basiselement kann in verschiedenen Farben hergestellt werden, insbesondere in Schwarz.

Die Folie dient als Trägermaterial für die erfindungsgemäße Lackschicht und für das gebildete Verbundmaterial und muss neben allgemeinen Beständigkeitsanforderungen vor allem die nötige thermische Verformbarkeit besitzen.

Die Trägerschicht wird bevorzugt in Form von Folien mit einer Dicke von 50 bis 5000 µm, bevorzugt 100 bis 2000 µm, besonders bevorzugt 125 µm - 1000 µm oder 175 µm - 700 µm verwendet. Insbesondere bevorzugt sind Foliendicken von 280 µm. Optional kann das Polymer der Trägerschicht Additive wie z.B. Stabilisatoren, Füllstoffe wie Fasern und Farbstoffe enthalten.

Die Oberflächen der Trägerfolien können beide glänzend, beide matt oder auch eine glänzend, eine matt ausgebildet sein.

Durch die Verwendung eines thermisch teilgehärteten und dann UV-endgehärteten Lacks, der Lackschicht, auf der Trägerschicht, wird eine besonders unempfindliche, chemikalien- und kratzfeste Oberfläche zur Verfügung gestellt, welche sich durch das erfindungsgemäße Verfahren überraschenderweise auch hervorragend dreidimensional verformen lässt, ohne dass sich die Eigenschaften verändern oder die Lackschicht zerstört oder beschädigt wird.

Die Schichtdicke (nach Trocknung und Härtung) des thermisch teilgehärteten und UV-endgehärteten Lacks beträgt 1 bis 100 µm, bevorzugt 5 bis 50 µm, besonders bevorzugt 20 bis 40 µm, ganz besonders bevorzugt 30 µm.

Die Lackschicht ist thermisch teilhärtbar und UV-strahlungsendhärtbar. Als Lackschicht findet daher eine thermisch und UV-strahlungshärtbarer Lackformulierung Verwendung, der Polyadditionsgruppen und radikalisch Gruppen (kurz härtbare Gruppen) enthalt.

Bevorzugt ist der Lack transparent. Auch nach erfolgter Teil- und Endhärtung ist die Lackschicht bevorzugt transparent, d.h. es handelt sich um eine Klarlackschicht.

Die erfindungsgemäßen Lackformulierungen enthalten:
A) Eine oder mehrere Verbindungen, die mindestens eine zur Polyaddition mit Komponente
B) geeignete und von b) verschiedene chemische Funktion a) enthalten, die
   A1) keine ethylenisch ungesättigte Doppelbindungen enthalten und/oder
   A2) ethylenisch ungesättigte Doppelbindungen enthalten
      und
B) Eine oder mehrere Verbindungen, die mindestens eine zur Polyaddition mit Komponente A) geeignete und von a) verschiedene chemische Funktion b) enthalten, die
   B1) keine ethylenisch ungesättigten Doppelbindungen enthalten und/oder
   B2) ethylenisch ungesättigte Doppelbindungen enthalten,
      wobei zumindest eine der Komponenten A oder B ethylenisch ungesättigten Doppelbindungen enthalten müssen, sowie gegebenenfalls
C) ethylenisch ungesättigten Verbindungen, die keine zur Polyaddition geeignete chemische Funktionen aufweisen
D) Fotoinitiatoren
E) optional Additive wie Stabilisatoren, Katalysatoren und andere Hilfs- und Zusatzstoffe
F) optional nichtfunktionelle Polymere und/oder Füllstoffe.

Geeignete chemische Funktionen a) und b) für die Polyaddition sind prinzipiell alle in der Beschichtungstechnologie üblicherweise verwendeten Funktionen. Insbesondere geeignet sind Isocyanat-Hydroxyl/Thiol/Amin, Carboxylat-Epoxid, Melamin-Hydrxoxyl, und Carbamat-Hydroxyl. Als Funktion a) sind ganz besonders bevorzugt Isocyanate auch in blockierter Form sowie als Funktion b) Hydroxyl, primäre und/oder sekundäre Amine sowie Asparaginat.

Als Isocyanate A werden aromatische, araliphatische, aliphatische und cycloaliphatische Di- oder Polyisocyanate verwendet. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)-methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mi-schungen. Bevorzugt sind die oligomeren Isocyanurate, Uretdione, Allophanate und Imi-nooxadiazindione des HDI, des IPDI und/oder der isomeren Bis(4,4'-isocyanatocyclohexyl)methane sowie deren Mischungen. Besonders bevorzugt sind die oligomeren Isocyanurate, Uretdione und Allophanate des IPDI sowie die oligomeren Isocyanurate der isomeren Bis(4,4'-isocyanatocyclohexyl)methane.

Es ist gegebenenfalls auch möglich, die vorgenannten Isocyanate A teilweise mit isocyanatreaktiven ethylenisch ungesättigten Verbindungen umgesetzt zu verwenden. Bevorzugt werden hierzu α,α-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxy-ethyl(meth)acrylat, Polyethylenoxidmono(meth)acrylate, Polypropylenoxidmono(meth)acrylate, Polyalkylenoxidmono(meth)acrylate, Poly("epsilon"-caprolacton)mono(meth)acrylate, wie z.B. Tone® M100 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht. Darüber hinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Es ist gegebenenfalls auch möglich, die vorgenannten Isocyanate A teilweise mit dem Fachmann aus der Beschichtungstechnologie bekannten Blockierungsmitteln umgesetzt zu verwenden. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Ma-lonsäurediethylester, Acetessigester, Acetonoxim, 3,5-Dimethylpyrazol, epsilon-Caprolactam, N-tert.-Butylbenzylamin, Cyclopentanoncarboxyethylester oder beliebige Gemische dieser Blockierungsmittel.

Die mittlere Zahl der funktionellen Gruppen a) also z.B. der Isocyanatgruppen pro Molekül (Funktionalität) der eingesetzten Komponente A beträgt in jedem Fall < 2,8, bevorzugt zwischen 1,5 und 2,5, besonders bevorzugt zwischen 1,8 und 2,1.

Als Verbindungen der Komponente A1 können alle vorgenannten Di- oder Polyisocyanate A einzeln oder in beliebigen Mischungen verwendet werden, die keine ethylenisch ungesättigten Funktionen aufweisen.

Als Verbindungen der Komponente A2 können alle vorgenannten Verbindungen A einzeln oder in beliebigen Mischungen verwendet werden, die mindestens eine Isocyanatgruppe aufweist und zusätzlich mindestens eine ethylenisch ungesättigte Funktion aufweist, die unter Einwirkung aktinischer Strahlung mit ethylenisch ungesättigten Verbindungen unter Polymerisation reagiert.

Isocyanat-reaktive Verbindungen B sind monomere, oligomere oder polymere Verbindungen sowie Mischungen einer oder mehrerer dieser Verbindungen.

Geeignete Verbindungen der Komponente B sind niedermolekulare kurzkettige, d.h. 2 bis 20 Kohlenstoffatome enthaltende aliphatische, araliphatische oder cycloaliphatische Diole, Triole und/oder höhere Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Bevorzugt sind aliphatische Diole, ganz besonders bevorzugt cycloaliphatische Diole.

Geeignet sind auch höhermolekulare aliphatische und cycloaliphatische Polyole wie Polyesterpolyole, Polyetherpolyole, Polycarbonatpolyole, hydroxyfunktionelle Acrylharze, hydroxyfunktionelle Polyurethane, hydroxyfunktionelle Epoxyharze oder entsprechende Hybride (vgl. Römpp Lexikon Chemie, S.465-466, 10. Aufl. 1998, Georg-Thieme-Verlag, Stuttgart). Bevorzugt sind (cyclo)aliphatische Polyesterpolyole und/oder (cyclo)aliphatische Polycarbonatpolyole, ganz besonders bevorzugt sind solche Polyester- und/oder Polycarbonatpolyole, die verzweigt linear aliphatische Diole enthalten.

Weiterhin können als Verbindungen der Komponente B alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden α,α-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Als hydroxyfunktionelle Acrylate oder Methacrylate kommen beispielsweise in Betracht Verbindungen wie 2-Hydroxyethyl(meth)acrylat, Polyethylenoxismono(meth)acrylate, Polypropylenoxidmono(meth)acrylate, Polyalkylenoxidmono(meth)acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Darüber hinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Die Herstellung von Polyesteracrylaten wird in der DE-A 4 040 290 (S.3, Z. 25 - S.6, Z. 24), DE A 3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135, beschrieben.

Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Bevorzugt sind Polyesteracrylate mit definierter Hydroxyfunktionalität.

Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten. Bevorzugt sind weiterhin Epoxyacrylate mit definierter Funktionalität wie sie aus der Umsetzung einer ggf. ungesättigten Disäure wie Fumarsäure, Maleinsäure, Hexahydrophthalsäure oder Adipinsäure und Glycidyl(meth)acrylat.

Aliphatische Epoxyacrylate sind besonders bevorzugt. Acrylierte Polyacrylate können beispielsweise durch Umsetzung von glycidylfunktionellen Polyacrylaten mit (Meth)acrylsäure hergestellt werden.

Die isocyanat-reaktive Komponente B weist im Mittel je Molekül nicht mehr als 2,6, bevorzugt zwischen 2,3 und 1,7, besonders bevorzugt zwischen 2,1 und 1,85 mit Isocyanaten reaktive Gruppen auf.

Als Verbindungen der Komponente B1 können alle vorgenannten isocyanat-reaktiven Verbindungen B einzeln oder in beliebigen Mischungen verwendet werden, die keine ethylenisch ungesättigten Funktionen aufweisen.

Als Verbindungen der Komponente B2 können alle vorgenannten Verbindungen B einzeln oder in beliebigen Mischungen verwendet werden, die mindestens eine Isocyanat-reaktive Gruppe aufweisen und zusätzlich mindestens eine ethylenisch ungesättigte Funktion auf-weisen, die unter Einwirkung aktinischer Strahlung mit ethylenisch ungesättigten Verbindungen unter Polymerisation reagiert.

Als Komponente C kommen eine oder mehrere monomere oder polymere Verbindungen in Frage, die mindestens eine funktionelle Gruppen tragen, die durch Einwirkung aktinischer Strahlung mit ethylenisch ungesättigten Verbindungen unter Polymerisation reagieren und die weder IsocyanatGruppen noch Isocyanat-reaktive Gruppen aufweisen. Solche Verbindungen sind beispielsweise Ester, Carbonate, Acrylate, Ether, Urethane oder Amide oder polymere Verbindungen dieser Strukturtypen. Es können auch beliebige Mischungen solcher Monomere und/oder Polymere eingesetzt werden, die mindestens eine unter Einwirkung aktinischer Strahlung polymerisierbare Gruppe enthalten.

Als Verbindungen der Komponente C können modifizierte Monomere oder Polymere eingesetzt werden, deren Modifizierung nach an sich bekannten Methoden erfolgt. Bei der Modifizierung werden entsprechende chemische Funktionalitäten in die Moleküle eingefügt. Geeignet sind α,α-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Vinylether, Acrylate und Methacrylate, besonders bevorzugt sind Acrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate.

Geeignete Ester werden üblicherweise durch Veresterung von Alkoholen mit 2 bis 20 Kohlenstoffatomen, bevorzugt mehrwertigen Alkoholen mit 2 bis 20 Kohlenstoffatomen, mit ungesättigten Säuren oder ungesättigten Säurechloriden erhalten, bevorzugt Acrylsäure und deren Derivate. Dazu können die dem Fachmann bekannten Methoden der Veresterung angewendet werden.

Geeignete Alkoholkomponenten bei der Veresterung sind einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Ebenfalls geeignet sind zweiwertige Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol, 1,4-Cyclohexandiol, 1,4-Cyclohexandimethanol und Tripropylenglykol. Geeignete höherwertige Alkohole sind Glycerin, Trimethylolpropan, Ditrimethylolpropan, Pentaerythrit oder Dipentaerythrit. Bevorzugt sind Diole und höherwertige Alkohole, besonders bevorzugt sind Glycerin, Trimethylolpropan, Pentaerythrit, Dipentaerythrit und 1,4-Cyclohexandimethanol.

Geeignete Ester bzw. Urethane sind beispielsweise auch durch Umsetzung ungesättigter OH-funktioneller, ungesättigter Verbindungen mit 2 bis 12, vorzugsweise 2 bis 4 Kohlenstoffatomen mit Säuren, Estern, Säureanhydriden oder Säurechloriden bzw. Isocyanaten zugänglich.

Als hydroxyfunktionelle Acrylate oder Methacrylate kommen beispielsweise in Betracht Verbindungen wie 2-Hydroxyethyl(meth)acrylat, Polyethylenoxidmono(meth)acrylate, Polypropylenoxidmono(meth)acrylate, Polyalkylenoxidmono(meth)acrylate, Po|y(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Beispiele für bevorzugte ungesättigte OH-funktionelle Verbindungen sind Hydroxyethyl-(meth)acrylat, 2- und 3-Hydroxypropyl(meth)acrylat, 2-, 3- und 4-Hydroxybutyl(meth)acrylat, weiterhin OH funktionelle Vinylether, wie z.B. Hydroxybutylvinylether sowie deren Mischungen.

Desweiteren können als OH-funktionelle ungesättigte Verbindungen OH-funktionelle (Meth)acrylsäureester bzw. -amide eingesetzt werden, die durch Umsetzung von bis zu n-1 Äquivalenten (Meth)acrylsäure mit n-wertigen Alkoholen, Aminen, Aminoalkoholen und/oder deren Gemischen erhältlich sind. Als n-wertige Alkohole kommen dabei Glycerin, Trimethylolpropan und/oder Pentaerythrit in Frage.

Ebenfalls können Produkte aus der Umsetzung von epoxyfunktionellen (Meth)acryl-säurester mit (Meth)Acrylsäure verwendet werden. So ergibt die Umsetzung von Glycidylmethacrylat mit Acrylsäure einen gemischten Acrylsäure- Methacrylsäureester des Glycerins, der besonders vorteilhaft verwendet werden kann.

Zur Darstellung von Urethanen aus diesen OH-funktionellen ungesättigten Verbindungen können Mono-, Di- oder Polyisocyanate verwendet werden. Dazu eignen sich isomere Butylisocyanate, Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Di-phenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, die oligomeren Isocyanurate, Uretdione und Allophanate des IPDI sowie die oligomeren Isocyanurate der isomeren Bis(4,4'-isocyanatocyclohexyl)methane sowie deren Mischungen.

Analog der obigen Beschreibung sind geeignete Polyester, Polycarbonate oder Polyurethane beispielsweise durch Umsetzung ungesättigter OH-funktioneller Verbindungen mit 2 bis 12, vorzugsweise 2 bis 4 Kohlenstoffatomen mit beispielsweise Säure-, Ester- oder Säurechloridfunktionellen Polyestern oder Polycarbonaten oder NCO-funktionellen Polyurethanen zugänglich.

Geeignet sind auch Umsetzungsprodukte von Polyestern mit Säurezahlen >5 und glycidylfunktionellen (Meth-)acrylaten (z.B. Glycidylmethacrylat).

Bevorzugt als OH-funktionelle ungesättigte Verbindungen zum Aufbau ungesättigter Polyester, Polycarbonate und Polyurethane sind Hydroxyethylacrylat und die isomeren Hydroxypropylacrylate. Besonders bevorzugt ist das Umsetzungprodukt aus Glycidylmethacrylat und Acrylsäure.

Polyacrylate können nur nach der Polymerisation der Acrylat- und Vinylaromatenmonomere strahlenhärtend modifiziert werden. Dies gelingt über funktionelle Gruppen, die inert gegenüber den Herstellungsbedingungen des Polyacrylats sind und anschließend erst zu ungesättigten strahlenhärtenden Gruppen weiter modifiziert werden. Geeignete Gruppen hierzu sind beispielsweise die in der folgenden Listung aufgeführten:

| Inerte Gruppe | Modifizierungsreagenz | Strahlenhärtende Gruppe |
|---|---|---|
| Epoxy | Acrylsäure, dimere Acrylsäure | Acrylat |
| Säure | Glycidylmethacrylat | Methacrylat |
| Säure | Hydroxyalkylacrylat | Acrylat |
| Alkohol | Maleinsäureanhydrid | Maleinat |
| Alkohol | Acrylsäure, dimere Acrylsäure | Acrylat |
| Alkohol | Acrylfunktionelles Isocyanat | Urethanacrylat |
| Isocyanat | Hydroxyalkylacrylat | Urethanacrylat |
| Anhydrid | Hydroxyalkylacrylat | Acrylat |

Fotoinitiatoren D sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind z.B. aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethylbenzoyl-diphenylphosphinoxid, Bisacylophos-phinoxide, Phenylglyoxylsäureester, Campherchinon, α Aminoalkylphenone, α, α -Di-alkoxyacetophenone und α - Hydroxyalkylphenone. Es kann vorteilhaft sein auch Gemische dieser Verbindungen einzusetzen. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Als Komponente E können in der Technologie der Lacke, Farben, Druckfarben, Dichtstoffe und Klebstoffe übliche Additive oder Hilfsmittel enthalten sein.

Geeignete Additive sind beispielsweise Lichtschutzmittel, wie UV-Absorber und reversible Radikalfänger (HALS), Antioxidantien, Entlüftungsmittel, Entschäumer, Netzmittel, Emulgatoren, Slipadditive, Polymerisationsinhibitoren, Haftvermittler, Weichmacher, Verlaufsmittel, filmbildende Hilfsmittel, Rheologiehilfsmittel, wie Verdicker und strukturviskose sogenannte "Sag Control Agents" (SCA), Flammschutzmittel, Korrosionsinhibitoren, Wachse, Sikkative und Biozide.

Diese und weitere geeignete Bestandteile werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

UV Absorber wandeln UV-Strahlung in Wärmeenergie um. Bekannte UV-Absorber sind Hydroxybenzophenone, Benzotriazole, Zimtsaureester und Oxalanilide. Radikalfänger binden intermedar gebildete Radikale. Bedeutende Radikalfanger sind sterisch gehinderte Amine, welche als HALS (Hindered Amine Light Stabilizers) bekannt sind. Für Außenanwendungen beträgt der Gehalt an UV-Absorbern und Radikalfangern insgesamt vorzugsweise 0,1 bis 5 Gew.-Teile, besonders bevorzugt 0,5 bis 4 Gew.Teile, bezogen auf 100 Gew.-Teile der strahlungshärtbaren Verbindungen.. Der Einsatz von Lichtschutzmitteln und die verschiedenen Typen sind beispielhaft beschrieben in A. Valet, Lichtschutzmittel für Lacke, Vincentz Verlag, Hannover, 1996

Erfindungsgemäß kann die Lackformulierung lösemittelbasiert sein, erfindungsgemäße Lösemittel sind beispielsweise Kohlenwasserstoffe, Alkohole, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid.

Ebenfalls vorteilhaft ist die Verwendung eines Reaktivverdünners. Als Reaktivverdünner können Verbindungen mitverwendet werden, die bei der Strahlenhärtung ebenfalls (co)polymerisieren und somit in das Polymernetzwerk eingebaut werden. Geeignete Reaktivverdünner, die mindestens eine, insbesondere mindestens zwei mit aktinischer Strahlung aktivierbare Bindung(en) enthalten, sind olefinisch ungesättigte Monomere, bevorzugt vinyl aliphatische Monomere und Acrylate, insbesondere Acrylate, mit mindestens einer radikalisch polymerisierbaren Doppelbindung und vorzugsweise mit mindestens zwei radikalisch polymerisierbaren Doppelbindungen. Geeignete Reaktivverdünner werden im Detail in Römpp Lexikon Lacke und Druckfarben, Georg Thieme Verlag, Stuttgart, New York, 1998 "Reaktivverdünner", Seiten 491 und 492 beschrieben.

Exemplarisch seien Ester der Acrylsäure oder Methacrylsäure, bevorzugt der Acrylsäure mit mono- oder mehrfachfunktionellen Alkoholen als Reaktivverdünner genannt. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylalipha-tischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, 1,2-Propandiol, 1,3-Propandiol, Diethylenglykol, Dipropylenglykol, die isomeren Butandiole, Neopentylglykol, 1,6-Hexandiol, 2-Ethylhexandiol und Tripropylenglykol oder auch alkoxylierte Derivate dieser Alkohole. Bevorzugte zweiwertige Alkohole sind 1,6-Hexandiol, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate. Ein geeigneter sechswertiger Alkohol ist Dipentaerythrit oder dessen alkoxylierte Derivate. Besonders bevorzugt sind die alkoxylierten Derivate der genannten zwei- bis sechswertigen Alkohole.

Als Komponente F können unfunktionelle Polymere und Füllstoffe zur Einstellung der mechanischen und optischen Eigenschaften enthalten sein, wie z.B. Pigmente, Farbstoffe und/oder Mattierungsmittel.

Als polymere Zusatzstoffe kommen Polymere wie beispielsweise Polyacrylate, Polycarbonate, Polyurethane, Polyolefine, Polyether, Polyester, Polyamide und Polyharnstoffe in Frage.

Als Füllstoffe können mineralische Füllstoffe, Glasfasern und/oder metallische Füllstoffe, wie sie in gängigen Rezepturen für sog. Metalliclackierungen zum Einsatz kommen, verwendet werden.

Pigmente können ausgewählt sein aus der Gruppe bestehend aus organischen und anorganischen, transparenten und deckenden, farb- und/oder effektgebenden sowie elektrisch leitfähigen Pigmenten. Geeignete Pigmente und Füllstoffe sind beispielsweise beschrieben in Lückert, Pigmente und Füllstofftabellen, Poppdruck, Langenhagen, 1994.

Die Verbindungen der Komponente F können sowohl als Bulkmaterial als auch in Form von Partikeln mit mittleren Durchmessern im Bereich zwischen einem und 20 000 Nanometern, bevorzugt im Bereich von einem bis 500 Nanometern, besonders bevorzugt im Bereich von zwei bis 200 Nanometern, eingesetzt werden.

Zur Mattierung können Partikel, Pigmente oder Füllstoffe mit einer mittleren Teilchengröße von 200 µm, bevorzugt 10 bis 20 µm, ganz besonders bevorzugt 5 bis 15 µm eingesetzt werden.

Auf der Lackschicht kann eine Schutzschicht, z.B. eine Abziehfolie, die ein unbeabsichtigtes Ausharten verhindert, aufgebracht sein. Diese kann vor oder nach dem Spritzgießprozess entfernt werden. Die Dicke kann z.B. 10 bis 150 µm, bevorzugt 20 bis 100 µm betragen. Die Schutzschicht kann z.B. aus Polyethylen, Polypropylen oder Polyester, (z.B. Polyethylenterephthalat) bestehen. Vor der Bestrahlung kann die Schutzschicht entfernt werden. Die Bestrahlung kann aber auch durch die Schutzschicht erfolgen, dazu muss die Schutzschicht im Wellenlangenbereich der Bestrahlung transparent sein.

Die Trägerfolie kann in einer Ausführungsform der Erfindung Oberflächen-vorbehandelt werden, so z.B. durch Koronaoberflächenbehandlung, Flammbehandlung, Oberflächenfluorierung, Plasmabehandlung oder UV-Vorbehandlung.

Zur Verbesserung der Haftung der Lackschicht auf der Trägerfolie werden vorteilhafterweise eine Oberflächenbehandlung der Folie vorgenommen, lösemittelhaltige Lackformulierungen verwendet, Isocyanatkomponenten und/oder Reaktivverdüner eingesetzt.

Die Lackschicht kann durch nasses Auftragen, z.B. durch Aufsprühen, Rakeln, Schlitzgießen oder Rollen und nachfolgendes Trocknen und/oder thermisches Teilhärten und nach dem Hinterspritzungsprozess durch UV-Strahlungsendhärtung hergestellt werden oder durch Extrusion oder Coextrusion (für beispielsweise Pulverlacksysteme), was einer Teilhärtung entspricht, und nach erfolgter Hinterspritzung der UV-Endhärtung zugeführt werden.

Unter thermischer Teilhärtung mittels Polyadditionsreaktion versteht man eine Polyreaktion bei der sich durch vielfach wiederholte Addition von di- oder polyfunktionellen Monomeren ein polymeres Produkt bildet wobei die Additionsreaktion ohne Abspaltung einer niedermolekularen Verbindung abläuft (s. Elias, Makromoleküle, 5. Aufl., Bd.1, S. 220 ff., Hüthig u. Wepf, Basel, 1990). Polyadditionsreaktionen sind beispielsweise die Bildung von Polyharnstoffen, Polyurethanen und die Reaktionen von Epoxidharzen mit Di- oder Polyaminen. Erfindungsgemäß bevorzugt ist die Teilhärtung durch Bildung von Polyurethanen aus Isocyanaten A und Isocyanat-reaktiven Komponenten B wie oben beschrieben. Durch die definierte Funktionalität der Komponenten A und B des Beschichtungsmittels entsteht dabei eine blockfeste Beschichtung mit thermoplastischen Eigenschaften.

Als blockfest wird eine Beschichtung bezeichnet, die keine Neigung zum Verkleben mit sich selbst aufweist (s. Zorll (Hrsg.), Römpp Lexikon Lacke und Druckfarben, 10. Aufl., S. 81, Georg Thieme Verlag, Stuttgart, 1998).

Soweit auch Vernetzer enthalten sind, die eine zusätzliche thermische Vernetzung bewirken, z.B. Isocyanate, kann z.B. gleichzeitig mit der Strahlungshärtung die thermische Vernetzung durch Temperaturerhöhung auf bis zu 150°C, vorzugsweise bis zu 130°C durchgeführt werden.

Die Trocknung und Aushärtung der thermisch teilzuhärtenden Lackschicht erfolgt im Allgemeinen unter normalen Temperaturbedingungen, d.h. Raumtemperatur ohne Erhitzung der Lackschicht bei Zweikomponentensystemen, die bei Mischung zu reagieren beginnen, aber vorzugsweise bei erhöhter Temperatur, die bei blockierten/geschützten Isocyanaten grundsätzlich benötigt wird. Unter erhöhter Temperatur wird erfindungsgemäß, z.B. bei 40 bis 250°C, vorzugsweise 40 bis 150°C und insbesondere bei 40 bis 130°C verstanden, für blockierte/geschützte Isocyanate werden Temperaturen von 120°C bis 160°C, bevorzugt 130 bis 140°C genutzt. Dies ist begrenzt und wird bestimmt durch die Thermostabilität des Trägers.

Nach dem ersten thermischen Teilhärtungsschritt des UV-endhärtbaren Lacks auf der Trägerschicht kann die resultierende lackbeschichtete Folie ggf. aufgerollt werden, ohne dass es zum Verkleben der Beschichtung mit der Rückseite der Substratfolie kommt. Es ist aber auch möglich die lackbeschichtete Folie zuzuschneiden und die Zuschnitte einzeln oder als Stapel der Weiterverarbeitung zuzuführen.

Bevorzugt wird die erfindungsgemäße Lackschicht aus einer Lackformulierung hergestellt, die wenigstens ein durch aktinische Strahlung härtbares Bindemittel enthält. Geeignete Bindemittel sind UV härtbare Polyurethandispersionen, UV härtbare Polyacrylatdispersionen und deren Mischungen und mit UV reaktiven Monomeren, weiterhin geeignet sind UV-härtbare Polyurethan(meth)acrylatdispersionen.

Geeignete kommerzielle Bindemittel sind beispielsweise erhältlich unter den Namen Lux® von Alberdingk & Boley GmbH, Krefeld, DE, insbesondere Lux 1613, 241, 285, 331, 460, 480; weiterhin, Laromer® von BASF AG, Ludwigshafen, DE, insbesondere LR 8949, 8983, 9005; weiterhin, Bayhydrol® UV von Bayer MaterialScience AG, Leverkusen, DE, insbesondere Bayhydrol® UV 2282, VP LS 2317, VP LS 2280 und XP 2629; weiterhin, Ucecoat® von Cytec Surface Specialities SA/NV, Brussels, BE, insbesondere Ucecoat® 7571, 7770, 7772, 7773, 7825 und 7849.

Die Herstellung geeigneter Urethan(meth)acrylate mit hohen Glasübergangstemperaturen ist im Detail und beispielhaft beschrieben in den Patentanmeldungen EP A 1 448 735 und EP A 1 541 649. EP A 1 448 735 beschreibt die Herstellung von Urethan(meth)acrylaten mit geeigneten Glasübergangstemperaturen und niedrigen Schmelzviskositäten und deren Verwendung in Pulverlacken. Diese Produkte können beispielsweise in organischen Lösungsmitteln gelöst verwendet werden. Weitere Urethan(meth)acrylate werden in WO 2005/080484, WO 2005/099943, WO 2005/118689, WO 2006/048109 beschrieben.

Geeignete Polyester(meth)acrylates sind bekannt. Insbesondere als Pulverlack erhältliche Bindemittel, die in organischen Lösungsmittels gelöst werden sind geeignet, wie z.B. Uvecoat® 2300 und 3003 von Cytec Surface Specialities BV/NV, Brussels, BE. Geeignete (Meth)acrylierte Polymere vinylischer Monomere sind ebenfalls bekannt, so z.B. Ebecryl® 1200 von Cytec Surface Specialities BV/NV, Brussels, BE. Geeignete Bestandteile entsprechender Bindemittel sind beispielsweise Urethan(meth)acrylate, Polyester(meth)acrylate, Epoxy(meth)acrylates und (Meth)acrylat Polymere wie Polyacrylate. Urethan(meth)acrylate sind bevorzugt.

Beispiele für geeignete Bindemittel und daraus resultierende Lacke sind dem Fachmann bekannt und werden beispielsweise in WO 2008/052665 A2 beschrieben.

Die Lackschicht kann weiterhin anorganische Nanopartikel, insbesondere Oxide, gemischte Oxide, Hydroxide, Sulfate, Carbonate, Carbide, Boride oder Nitride der Hauptgruppenelemente II bis IV des Periodensystems oder Nebengruppenelemente der Gruppen I bis VIII inklusive der Lanthanoiden enthalten. Bevorzugte anorganische Nanopartikel sind Oxide des Siliciums, Aluminiums, Cers, Zirkoniums, Niobiums, Zinks oder Titans, besonders bevorzugt Oxide des Siliciums und des Titans.

Die Nanopartikel haben bevorzugt einen mittleren Teilchendurchmesser von weniger als 200 nm, bevorzugt weniger als 5 bis 100 nm, (gemessen mit dynamischer Lichtstreuung in Dispersion als Z-Mittel). Bevorzugt haben mehr 75%, noch bevorzugter 90% der Nanopartikel eine Teilchengröße wie eben beschrieben.

Unter UV-Strahlungsendhärtung mit aktinischer (UV) Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den oben beschriebenen Fotoinitiatoren freigesetzt werden.

Nach dem Hinterspritzen mit einem thermoplastischen Kunststoff als Basiselement wird die thermisch teilgehärtete, thermisch verformte Lackschicht der Folie durch Bestrahlung mit aktinischer Strahlung endgehärtet. Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 90 bis 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Endhärtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kaschierfolien wie Kunststofffolien, Glas oder Flüssigkeiten wie Wasser.

Je nach Strahlungsdosis und Endaushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Besonders bevorzugt werden zur Endhärtung Quecksilberstrahler mit einer Leistung von 120 W/cm in ortsfesten Anlagen eingesetzt, wobei das endzuhärtende Formteil an dem Strahler vorbeigeführt wird. Fotoinitiatoren werden dann in Konzentrationen von 0,1 bis 10, besonders bevorzugt 0,2 bis 3,0 Gew.-% bezogen auf den Festkörper der Lackschicht eingesetzt. Zur Härtung dieser Beschichtungen wird bevorzugt eine Dosis von 500 bis 4000 mJ/cm2, von 500 bis 5000 mJ/cm², bevorzugt 1000 bis 3000 mJ/cm², besonders bevorzugt 1500 mJ/cm², gemessen im Wellenlängenbereich von 200 bis 600 nm, verwendet.

Bei der UV-Endhärtung kann es durch die UV-Strahler zu einer erhöhten Umgebungstemperatur kommen, so kann in einer Ausführungsform der Erfindung die UV Endhärtung bei Temperaturen von 60°C bis 100°C, bevorzugt 70°C bis 90°C, besonders bevorzugt bei 80°C stattfinden.

Ebenfalls Gegenstand der Erfindung ist die Verwendung der erfindungsgemäßen Formkörper im Außenbereich von Gebäuden, als Kraftfahrzeugteile im Außen- und Innenbereich, z.B. Kotflügel, Türverkleidungen, Stoßstangen, Spoiler, Schürzen, wie auch Außenspiegel, als Bedienblenden für den Fahrzeug(innen)bau, Zug(innen)bau, Schiff(innen)bau und/oder Flugzeug(innen)bau, im Möbelbau, in elektronischen Geräten, Kommunikationsgeräten, Gehäusen oder dekorativen Gegenständen.

Die Erfindung lässt zahlreiche Ausführungsformen zu. Zur weiteren Verdeutlichung ihres Grundprinzips ist eine davon in einer Zeichnung dargestellt und wird nachfolgend beschrieben.

### Beispiele:

Die Erfindung wird anhand folgender Beispiele illustriert ohne sie auf diese zu beschränken.

Diese zeigt in
- Fig. 1: ein Werkzeug mit eingelegter Folie in Seitenansicht;
- Fig. 2: ein Werkzeug während des Hinterspritzvorgangs in Seitenansicht;
- Fig. 3: a) Vergleichsfolie A nach dem Zuschneiden/Stanzen in 50-, in 150- und in 200-facher Vergrößerung mit Rissen und Splittern;
b) Vergleichsfolie A nach dem Zuschneiden/Stanzen im Profil und sichtbaren Rissen;
- Fig. 4: ein Vergleichsformteil A mit Vergleichsfolie A mit durch Hinterspritzung a) verformter Lackschicht und Folie im Radius mit Rissen und b) fein strukturierter Oberfläche der Lackschicht mit Mikrorissen;
- Fig. 5: ein Vergleichsformteil B mit Vergleichsfolie B mit sichtbaren a) Lackablösungen und b) Blasenbildung;
- Fig. 6: eine erfindungsgemäße Folie nach dem Zuschneiden/Stanzen in 50-, in 150- und in 200-facher Vergrößerung;
- Fig. 7: ein erfindungsgemäßes Formteil mit durch Hinterspritzung a) rissfrei verformter Lackschicht und Folie im Radius, b) rissfreie fein strukturierter Oberfläche und c) riss, blasen- und ablösungsfreie, verschieden gestaltete Oberflächen.

### 1. Vergleichsbeispiel:

Herstellung eines Vergleichsformteils A mit ausgehärteter Lackschicht versehene Vergleichsfolie A

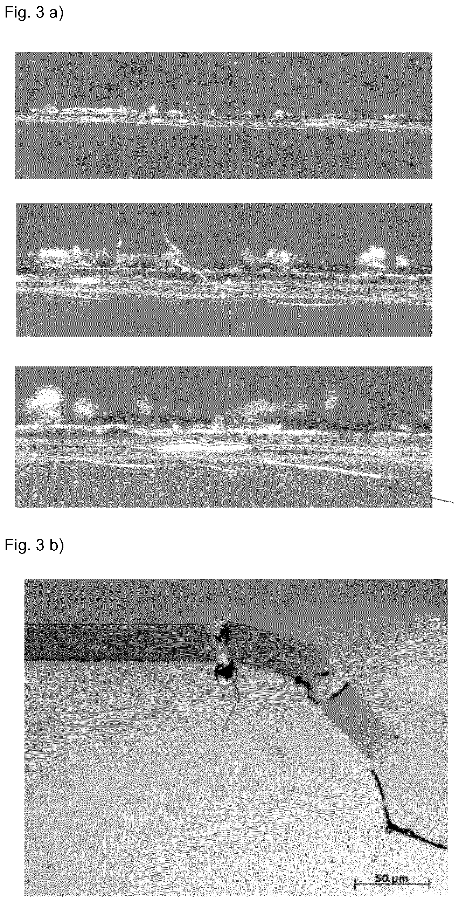

Eine optional rückseitig bedruckte Folie aus Polycarbonat mit einer Schichtdicke von 280 µm und einer ausgehärtete Lackschicht basierend auf UV-gehärteten aliphatische Urethanacrylat-Beschichtung grundsätzlich entsprechend der Offenbarung der DE 102010020039A1 wurde auf einem Schneidplotter zugeschnitten und als 2 D Insert vorbereitet. Hierbei treten am Folienrand Risse in und Ablösungen/Splitter in der vorgehärteten Lackschicht auf (s. Fig 3 a) und b)).

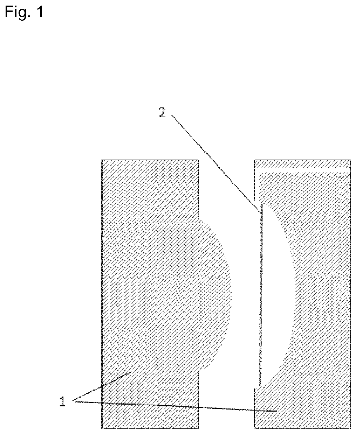

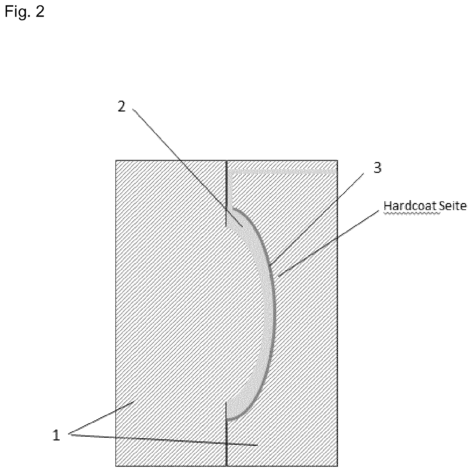

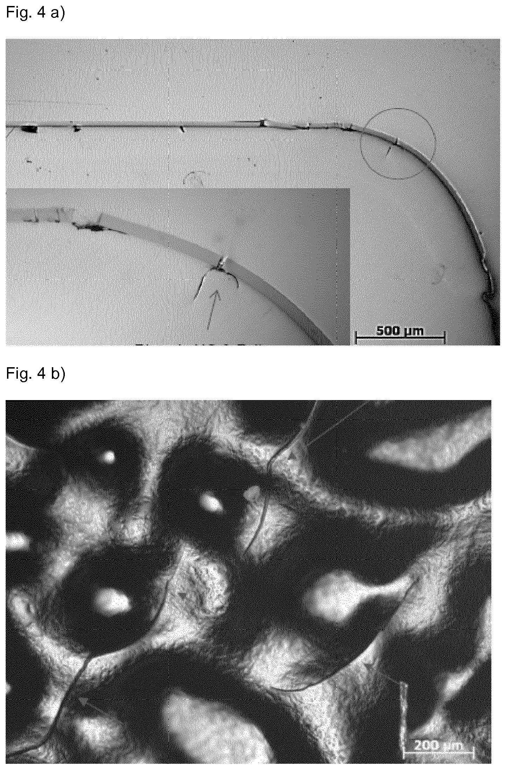

Die Folie (2) wurde mit der Lackschicht in Richtung Matrize in die Werkzeugkavität des Werkzeugs (1) einer HL Blende in eine Spritzgießmaschine der Firma Arburg gelegt und teilweise auf bestehende Kerne manuell aufgesteckt (Fig. 1). Hierbei ist die Lackschicht zur Außenseite gerichtet, stellt also später die Sichtseite des Formteils dar. Anschließend wurde das Werkzeug geschlossen und die Folie mit der heißen Schmelze (3) hinterspritzt (Fig. 2). Dabei betrug die Schließkraft 200 t und der Schneckendurchmesser lag bei 45mm. Die Füllzeit betrug 2 s. Als Hinterspritzmaterial wurde Makrolon 2205 der Fa. Bayer MaterialScience AG, Leverkusen, DE, in der Farbe 901510 (Schwarz) verwendet. Die Massetemperatur lag bei 280°C und die Werkzeugtemperatur bei 60°C. Durch den Füllvorgang, die Temperatur und den Spritzdruck wurde die Folie nun in ihre eigentliche Form gebracht. Dabei verband sich die Folie bzw. der Insert mit dem thermoplastischen Material. Nach dem Abkühlen wurde das Werkzeug geöffnet und das Formteil entnommen. Die Radien des Bauteils waren teilweise ca. 1/3 mit der beschichteten Folie abgedeckt und geschützt. In der Mikroskopaufnahme sind Risse in der Lackschicht, die bis in die Trägerschicht führen, im Radius zu erkennen (Fig 4 a)). Auch eine Variation der Maschinenparameter wie Schmelztemperatur und Werkzeugtemperatur zeigten keine positiven Ergebnisse, d. h. die Rissbildung kann bei der Vergleichsfolie A mit ausgehärteter Lackschicht durch veränderte Verfahrensführung nicht vermieden werden.

Durch Verwendung einer genarbten Werkzeugmatrize wurde versucht, eine genarbte, fein strukturierte funktionelle Fläche als Sichtfläche auszubilden. Wird die ausgehärtete Vergleichsfolie A in ein genarbtes Werkzeug eingelegt und hinterspritzt, ist eine Oberflächenprägung ohne Risse (Microcracks) nicht möglich (Fig. 4 b)).

### 2. Vergleichsbeispiel:

Herstellung eines Vergleichsformteils B mit einer thermisch getrockneten Lackschicht versehenen Vergleichsfolie B.

Eine optional rückseitig bedruckte Folie aus Polycarbonat mit einer Schichtdicke von 280 µm und mit einer thermisch getrockneten Lackschicht aus einer UV härtenden Acrylatdispersion wurde wie in Beispiel 1 beschrieben zugeschnitten und hinterspritzt.

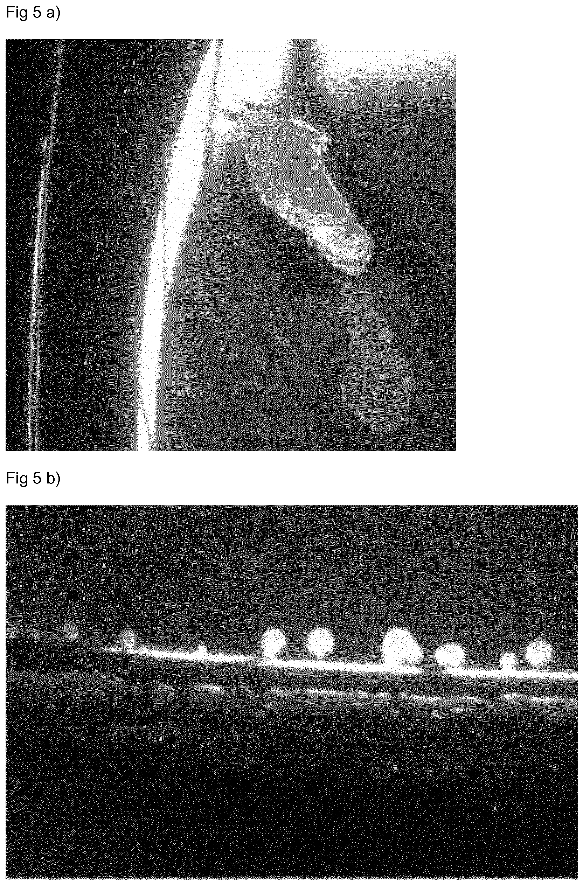

Beim Zuschneiden bzw. Stanzen traten zwar keine Risse an den Schnittkanten auf, nach dem Auslösen des hinterspritzten Formteils aus dem Werkzeug zeigte sich allerdings, dass sich die Lackschicht teilweise gelöst hatte und in Bereichen Blasen aufwies (Fig. 5 a) und b)).

### 3. Erfindungsgemäßes Beispiel:

Herstellung eines erfindungsgemäßen Formteils mit einer thermisch teilgehärteten UV-endhärtbaren Lackschicht versehenen erfindungsgemäßen Folie
Eine optional rückseitig bedruckte Folie erhältlich von Bayer MaterialScience AG, Leverkusen, Makrofol® HF 329 G-4 020011 aus Polycarbonat mit einer Schichtdicke von 280 µm mit einer thermisch teilgehärteten UV-endhärtbaren Lackschicht aus einem lösemittelhaltigen, UV härtbaren Bindemittel mit zusätzlichem Polyisocyanatvernetzer wurde wie in Beispiel 1 beschrieben zugeschnitten und hinterspritzt.

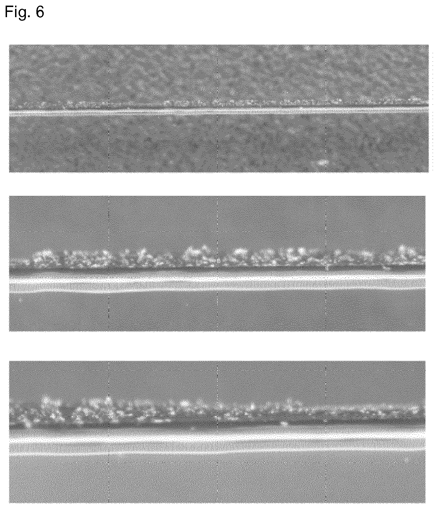

Beim Zuschneiden bzw. Stanzen traten keine Risse an den Schnittkanten auf (Fig. 6), nach dem Auslösen des hinterspritzten erfindungsgemäßen Formteils wurde das Bauteil auf einer UV-Anlage der Firma SSR ausgestattet mit einer Quecksilberhochdrucklampe ausgehärtet. Die Härtebedingungen betrugen: UV-Strahlungdosis: 2000 mJ/cm², Bandgeschwindigkeit: 3m/min, Lampenabstand zum Bauteil ca. 100 mm.

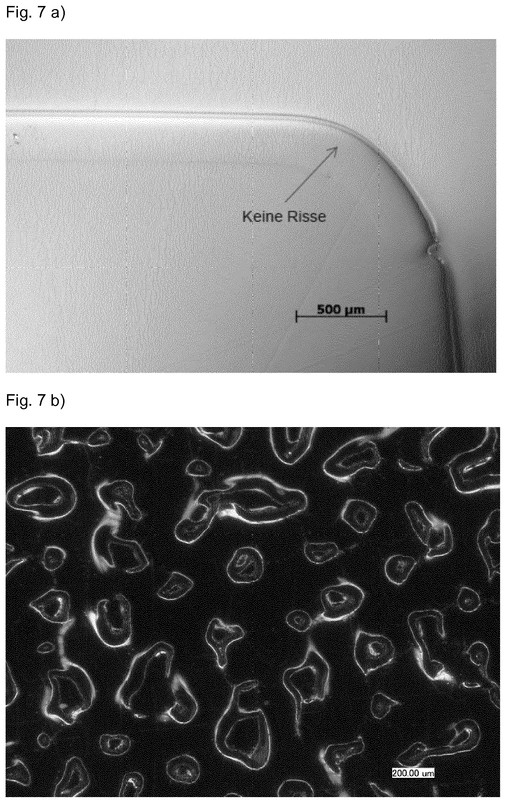

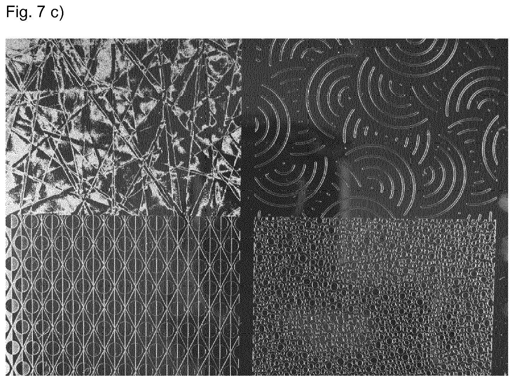

Es zeigte sich im Mikroskopschnitt eine rissfreie Lackschicht im Radius (Fig. 7 a)).

Wird diese mit thermisch teilgehärteten UV-endhärtbaren Lackschicht ausgerüstete Folie in ein genarbtes Werkzeug eingelegt und hinterspritzt, ist sogar eine feine Oberflächenprägung möglich. In der Lackschicht wurden, auch bei Darstellung verschiedener, unterschiedlich anspruchsvoller Oberflächenstrukturierungen, keine Risse (Microcracks) beobachtet noch Blasenbildung oder Lackablösungen (Fig. 7 b) und c)).

Überraschenderweise war selbst bei hohen Schmelze-/ Werkzeugtemperaturen ein Hinterspritzen ohne Beschädigung der Lackschicht möglich. Auch eine Veränderung der Maschinenparameter wie Massetemperatur 280 bis 310°C und Werkzeugtemperatur 50 bis 110°C zeigten keine negativen Effekte. Es ist bekannt, dass nichtvorgehärtete Folien nicht hinterspritzbar sind, da eine Ablösung der Beschichtung oder Blasenbildung wie in Vergleichsbeispiel 2 partiell stattfinden kann. Dieser Effekt konnte bei der dem erfindungsgemäßen Formteil nicht festgestellt werden.

Auch beim Spritzgießverfahren "Spritzprägen", bei dem das Werkzeug zu Beginn einen Spalt aufweist, beim bzw. nach dem Einspritzen dann geschlossen wird womit Farbauswaschungen durch die eindringende Spritzgußmassse vermieden wird, konnte kein negativer Effekt beobachtet werden.

## Patentansprüche

1. Verfahren zur Herstellung eines mit einem UV-gehärteten Lack versehenen Formteils aus Kunststoff in einem Spritzgießwerkzeug mit einer als funktionelle Fläche ausgebildeten Sichtfläche, wobei der UV-gehärtete Lack besagte Sichtfläche bildet, bei welchem
- ein aus einer Trägerschicht aus einem thermoplastischen Kunststoff und einem thermisch teilgehärteten UV-härtbaren Lack bestehender, nicht vorgeformter und im Wesentlichen ebener Folienzuschnitt (2) derart in einer Kavität des Spritzgießwerkzeugs (1) angeordnet wird, dass die teilgehärtete Lackschicht einer die Negativform der Sichtfläche des Formteils abbildenden Matrizenoberfläche zugewandt ist, und
- bei welchem der in der Kavität angeordnete Folienzuschnitt von einer dem thermisch teilgehärteten UV-härtbaren Lack abgewandten rückseitigen Oberfläche mit einem thermoplastischen Kunststoff derart hinterspritzt (3) wird, dass sich die Trägerschicht des Folienzuschnitts (2) mit der eingespritzten heißen Schmelze verbindet und
- dass eine aus dem Einspritzdruck der eingespritzten Schmelze resultierende Druckkraft in Richtung der Matrizenoberfläche gerichtet ist, wobei der Folienzuschnitt (2) unter der Einwirkung der Druckkraft und einer aus dem direkten Kontakt mit der heißen Schmelze resultierenden Erwärmung vollflächig an die Matrizenoberfläche gedrückt und dreidimensional verformt wird und
- nach Herauslösen des Formteils der thermisch teilgehärtete UV-härtbare Lack durch UV-Strahlung endgehärtet wird und die als funktionelle Fläche ausgebildete Sichtfläche des Formteils bildet.

2. Verfahren nach Anspruch 1, **dadurch gekennzeichnet, dass** zumindest ein die Kavität begrenzender Bereich des Spritzgießwerkzeugs (1) vor und/oder während und/oder nach der Herstellung des Formteils temperiert wird.

3. Verfahren nach den Ansprüchen 1 oder 2, **dadurch gekennzeichnet, dass** der Folienzuschnitt (2) im Bereich einer Einspritzöffnung des Spritzgießwerkzeugs (1) derart fixiert wird, dass die aus dem Einspritzdruck der eingespritzten Schmelze resultierende Druckkraft auf eine der Lackschicht abgewandte rückseitige Oberfläche des Folienzuschnitts (2) gerichtet ist.

4. Verfahren nach zumindest einem der vorangehenden Ansprüche, **dadurch gekennzeichnet, dass** dem eingespritzten thermoplastischen Kunststoff (3) mit einem Treibmittel beladen wird.

5. Verfahren nach zumindest einem der vorangehenden Ansprüche, **dadurch gekennzeichnet, dass** vor dem Hinterspritzen des Folienzuschnitts (2) auf einer der Lackschicht abgewandten rückseitigen Oberfläche des Folienzuschnitts (2) zumindest abschnittsweise ein Farbauftrag angeordnet wird.

6. Verfahren nach zumindest einem der vorangehenden Ansprüche, **gekennzeichnet dadurch, dass** an dem Formteil zumindest ein Funktionselement angespritzt wird.

7. Verfahren nach zumindest einem der vorangehenden Ansprüche, **dadurch gekennzeichnet, dass** das Formteil durch Hinterspritzen des Folienzuschnitts (2) im Ein- oder Mehrkomponentenspritzgussverfahren hergestellt wird.

8. Ein mit einem UV-gehärteten Lack versehenes Formteil aus Kunststoff mit einer als funktionelle Fläche ausgebildeten Sichtfläche, wobei der UV-gehärtete Lack besagte Sichtfläche bildet, **dadurch gekennzeichnet, dass** das Formteil aus einem Basiselement aus einem thermoplastischen Kunststoff und einer mit dem Basiselement verbundenen Folie (2) besteht, welche eine thermoplastische Trägerschicht (3) und einen sichtseitig angeordneten thermisch teilgehärteten UV-endhärtbaren Lack aufweist, der nach dem Hinterspritzen UV-endgehärtet wird, wobei das Basiselement auf einer der Lackschicht abgewandten rückseitigen Oberfläche der Folie (2) angespritzt ist und eine durch die Folie (2) gebildete Sichtfläche zumindest abschnittsweise dreidimensional ausgeformt ist,
und wobei der thermisch teilgehärtete UV-endhärtbare Lack aus einer Lackformulierung enthaltend
A) eine oder mehrere Verbindungen, die mindestens eine zur Polyaddition mit Komponente B) geeignete und von b) verschiedene chemische Funktion a) enthalten, die
A1) keine ethylenisch ungesättigte Doppelbindungen enthalten und/oder
A2) ethylenisch ungesättigte Doppelbindungen enthalten
und
B) eine oder mehrere Verbindungen, die mindestens eine zur Polyaddition mit Komponente A) geeignete und von a) verschiedene chemische Funktion b) enthalten, die
B1) keine ethylenisch ungesättigten Doppelbindungen enthalten und/oder
B2) ethylenisch ungesättigte Doppelbindungen enthalten,
wobei zumindest eine der Komponenten A oder B ethylenisch ungesättigten Doppelbindungen enthalten müssen, sowie gegebenenfalls
C) ethylenisch ungesättigten Verbindungen, die keine zur Polyaddition geeignete chemische Funktionen aufweisen
D) Fotoinitiatoren
E) optional Additive wie Stabilisatoren, Katalysatoren und andere Hilfs- und Zusatzstoffe
F) optional nichtfunktionelle Polymere und/oder Füllstoffe
erhalten wird.

9. Formteil nach zumindest einem der vorangehenden Ansprüche, **dadurch gekennzeichnet, dass** die Folie (2) und/oder das Basiselement transparent ausgebildet ist.

10. Formteil nach zumindest einem der vorangehenden Ansprüche, **dadurch gekennzeichnet, dass** die Trägerschicht der Folie (2) und/oder das Basiselement aus Polycarbonat (PC), Polymethylmethacrylat (PMMA) oder (Co)Polyesther besteht.

11. Formteil nach zumindest einem der vorangehenden Ansprüche, **dadurch gekennzeichnet, dass** auf einer der Lackschicht abgewandten rückseitigen Oberfläche der Folie (2) zumindest abschnittsweise ein Farbauftrag angeordnet ist.

12. Formteil nach zumindest einem der vorangehenden Ansprüche, **dadurch gekennzeichnet, dass** der thermoplastische Kunststoff, der das Basiselement ausbildet, mit einem Treibmittel beladen wird.

13. Formteil nach zumindest einem der vorangehenden Ansprüche, **dadurch gekennzeichnet, dass** das Basiselement zumindest ein angespritztes Funktionselement aufweist.

14. Formteil nach zumindest einem der vorangehenden Ansprüche, **dadurch gekennzeichnet, dass** das Basiselement und die Funktionselemente durch Hinterspritzen der Folie (2) im Ein- oder Mehrkomponentenspritzgussverfahren hergestellt sind.

## Claims

1. Process for production, in an injection mold, of a plastics molding with a UV-cured lacquer and with a visible area designed as functional area, where the UV-cured lacquer forms said visible area, where
- a film segment (2) that has not been preformed and that is in essence flat, composed of a carrier layer made of a thermoplastic and of a partially thermally cured UV-curable lacquer is arranged in a cavity of the injection mold (1) in such a way that the partially cured lacquer layer faces toward a female-mold surface replicating the negative form of the visible area of the molding, and
- where the film segment arranged in the cavity is subjected to insert molding (3) with a thermoplastic on a reverse-side surface facing away from the partially thermally cured UV-curable lacquer, in such a way that the carrier layer of the film segment (2) bonds to the injected hot melt, and
- that a compressive force resulting from the injection pressure of the injected melt acts in the direction of the female-mold surface, whereupon, with exposure to the compressive force and to heating resulting from the direct contact with the hot melt, the entire area of the film segment (2) is forced onto the female-mold surface and subjected to a three-dimensional forming process, and
- after removal of the molding, the partially thermally cured UV-curable lacquer is cured to completion by UV radiation and, on the molding, forms the visible area designed as functional area.

2. Process according to Claim 1, **characterized in that**, before and/or during and/or after the production of the molding, at least a region delimiting the cavity within the injection mold (1) is subjected to temperature control.

3. Process according to Claim 1 or 2, **characterized in that**, in the region of an injection aperture of the injection mold (1), the film segment (2) is fixed in such a way that the compressive force resulting from the injection pressure of the injected melt acts toward a reverse-side surface facing away from the lacquer layer on the film segment (2).

4. Process according to at least one of the preceding claims, **characterized in that** the thermoplastic (3) injected is loaded with a blowing agent.

5. Process according to at least one of the preceding claims, **characterized in that**, before the film segment (2) is subjected to insert molding, a color is applied at least on a section of a reverse-side surface facing away from the lacquer layer of the film segment (2).

6. Process according to at least one of the preceding claims, **characterized in that** at least one functional element is injection-molded onto the molding.

7. Process according to at least one of the preceding claims, **characterized in that** the molding is produced by subjecting the film segment (2) to insert molding in the single- or multicomponent injection-molding process.

8. A plastics molding provided with a UV-cured lacquer and having a visible area designed as functional area, where the UV-cured lacquer forms said visible area, **characterized in that** the molding is composed of a main element made of a thermoplastic and, bonded to the main element, a film (2) which comprises a thermoplastic carrier layer (3) and which comprises, arranged on the visible side, a partially thermally cured lacquer that is amenable to completion of curing by UV, curing of which is completed by UV after the insert-molding process, where the main element has been injection-molded on a reverse-side surface facing away from the lacquer layer on the film (2), and at least a section of a visible area formed by the film (2) has been three-dimensionally shaped,
and where the partially thermally cured lacquer that is amenable to completion of curing by UV is obtained from a lacquer formulation comprising
A) one or more compounds which comprise at least one chemical function a) suitable for polyaddition with component B) and different from b), which
A1) comprise no ethylenically unsaturated double bonds and/or
A2) comprise ethylenically unsaturated double bonds,
and
B) one or more compounds which comprise at least one chemical function b) suitable for polyaddition with component A) and different from a), which
B1) comprise no ethylenically unsaturated double bonds and/or
B2) comprise ethylenically unsaturated double bonds,
where at least one of components A and B must comprise ethylenically unsaturated double bonds, and also optionally
C) ethylenically unsaturated compounds which have no chemical functions suitable for polyaddition
D) photoinitiators
E) optionally additives such as stabilizers, catalysts and other auxiliaries and additional substances
F) optionally nonfunctional polymers and/or fillers.

9. Molding according to at least one of the preceding claims, **characterized in that** the film (2) and/or the main element is/are transparent.

10. Molding according to at least one of the preceding claims, **characterized in that** the carrier layer of the film (2) and/or the main element is/are made of polycarbonate (PC), polymethyl methacrylate (PMMA), or (co)polyester.

11. Molding according to at least one of the preceding claims, **characterized in that** a color has been applied at least on a section of a reverse-side surface facing away from the lacquer layer of the film (2).

12. Molding according to at least one of the preceding claims, **characterized in that** the thermoplastic which forms the main element is loaded with a blowing agent.

13. Molding according to at least one of the preceding claims, **characterized in that** the main element has at least one functional element molded-on by injection molding.

14. Molding according to at least one of the preceding claims, **characterized in that** the main element and the functional elements have been produced by subjecting the film (2) to insert molding in the single- or multicomponent injection-molding process.

## Revendications

1. Procédé de fabrication d'une pièce moulée en matière plastique munie d'un vernis durci par UV dans un outil de moulage par injection, comprenant une surface visible configurée sous la forme d'une surface fonctionnelle, le vernis durci par UV formant ladite surface visible, selon lequel
une découpe de feuille (2) constituée par une couche support en une matière plastique thermoplastique et un vernis durcissable par UV partiellement durci thermiquement, non préformée et essentiellement plate, est agencée dans une cavité de l'outil de moulage par injection (1) de telle sorte que la couche de vernis partiellement durcie soit orientée vers une surface de matrice représentant la forme négative de la surface visible de la pièce moulée, et
selon lequel la découpe de feuille agencée dans la cavité est surmoulée (3) avec une matière plastique thermoplastique par une surface arrière opposée au vernis durcissable par UV partiellement durci thermiquement, de telle sorte que la couche support de la découpe de feuille (2) soit reliée avec la masse fondue chaude injectée, et
qu'une force de pression résultant de la pression d'injection de la masse fondue injectée soit orientée dans la direction de la surface de matrice, la découpe de feuille (2) étant pressée sur toute sa surface sur la surface de matrice et déformée tridimensionnellement sous l'effet de la force de pression et d'un chauffage résultant du contact direct avec la masse fondue chaude, et
après le détachement de la pièce moulée, le vernis durcissable par UV partiellement durci thermiquement est soumis à un durcissement final par un rayonnement UV et forme la surface visible de la pièce moulée configurée sous la forme d'une surface fonctionnelle.

2. Procédé selon la revendication 1, **caractérisé en ce qu'**au moins une zone de l'outil de moulage par injection (1) délimitant la cavité est conditionnée en température avant et/ou pendant et/ou après la fabrication de la pièce moulée.

3. Procédé selon la revendication 1 ou 2, **caractérisé en ce que** la découpe de feuille (2) est fixée dans la zone d'une ouverture d'injection de l'outil de moulage par injection (1), de telle sorte que la force de pression résultant de la pression d'injection de la masse fondue injectée soit orientée vers une surface arrière opposée à la couche de vernis de la découpe de feuille (2).

4. Procédé selon au moins l'une quelconque des revendications précédentes, **caractérisé en ce que** la matière plastique thermoplastique injectée (3) est chargée avec un agent gonflant.

5. Procédé selon au moins l'une quelconque des revendications précédentes, **caractérisé en ce qu'**un revêtement de peinture est agencé au moins par sections avant le surmoulage de la découpe de feuille (2) sur une surface arrière opposée à la couche de vernis de la découpe de feuille (2).

6. Procédé selon au moins l'une quelconque des revendications précédentes, **caractérisé en ce qu'**au moins un élément fonctionnel est injecté sur la pièce moulée.

7. Procédé selon au moins l'une quelconque des revendications précédentes, **caractérisé en ce que** la pièce moulée est fabriquée par surmoulage de la découpe de feuille (2) par le procédé de moulage par injection mono- ou multicomposant.

8. Pièce moulée en matière plastique munie d'un vernis durci par UV comprenant une surface visible configurée sous la forme d'une surface fonctionnelle, le vernis durci par UV formant ladite surface visible, **caractérisée en ce que** la pièce moulée est constituée par un élément de base en une matière plastique thermoplastique et une feuille (2) reliée avec l'élément de base, qui comprend une couche support thermoplastique (3) et un vernis partiellement durci thermiquement, pouvant être soumis à un durcissement final par UV, agencé sur le côté visible, qui est soumis à un durcissement final par UV après le surmoulage, l'élément de base étant injecté sur une surface arrière opposée à la couche de vernis de la feuille (2), et une surface visible formée par la feuille (2) étant façonnée tridimensionnellement au moins par sections,
et le vernis partiellement durci thermiquement qui peut être soumis à un durcissement final par UV étant obtenu à partir d'une formulation de vernis qui contient :
A) un ou plusieurs composés qui contiennent au moins une fonction chimique a) appropriée pour la polyaddition avec le composant B) et différente de b), qui
A1) ne contiennent pas de doubles liaisons éthyléniquement insaturés et/ou
A2) contiennent des doubles liaisons éthyléniquement insaturées,
et
B) un ou plusieurs composés qui contiennent au moins une fonction chimique b) appropriée pour la polyaddition avec le composant A) et différente de a), qui
B1) ne contiennent pas de doubles liaisons éthyléniquement insaturées et/ou
B2) contiennent des doubles liaisons éthyléniquement insaturées,
C) au moins un des composants A ou B devant contenir des doubles liaisons éthyléniquement insaturées, et éventuellement
D) des composés éthyléniquement insaturés, qui ne comprennent pas de fonctions chimiques appropriées pour la polyaddition,
des photoinitiateurs,
E) éventuellement des additifs tels que des stabilisateurs, des catalyseurs et d'autres adjuvants et additifs,
F) éventuellement des polymères non fonctionnels et/ou des charges.

9. Pièce moulée selon au moins l'une quelconque des revendications précédentes, **caractérisée en ce que** la feuille (2) et/ou l'élément de base sont configurés sous forme transparente.

10. Pièce moulée selon au moins l'une quelconque des revendications précédentes, **caractérisée en ce que** la couche support de la feuille (2) et/ou l'élément de base sont constitués par du polycarbonate (PC), du polyméthacrylate de méthyle (PMMA) ou du (co)polyester.

11. Pièce moulée selon au moins l'une quelconque des revendications précédentes, **caractérisée en ce qu'**un revêtement de peinture est agencé au moins par sections sur une surface arrière opposée à la couche de vernis de la feuille (2).

12. Pièce moulée selon au moins l'une quelconque des revendications précédentes, **caractérisée en ce que** la matière plastique thermoplastique qui forme l'élément de base est chargée avec un agent gonflant.

13. Pièce moulée selon au moins l'une quelconque des revendications précédentes, **caractérisée en ce que** l'élément de base comprend au moins un élément fonctionnel injecté.

14. Pièce moulée selon au moins l'une quelconque des revendications précédentes, **caractérisée en ce que** l'élément de base et les éléments fonctionnels sont fabriqués par surmoulage de la feuille (2) par le procédé de moulage par injection mono- ou multicomposant.
